# FASCICULE DE BREVET EUROPEEN

(11) **EP 0 496 675 B1**
(45) Date de publication et mention de la délivrance du brevet: **27.09.1995**
(21) Numéro de dépôt: 92400167.0
(22) Date de dépôt: 22.01.1992
(51) Int. Cl.: H04Q 11/00, H04J 14/02, H04B 10/20

(54) **Procédé et réseau de communication sur fibres optiques avec multiplexage en fréquence**
Verfahren und Netzwerk zur Kommunikation über optische Fasern mit Frequenzmultiplex
Procedure and communication network on optical fibres with frequency division multiplex

(30) Priorité: 24.01.1991 FR 9100791
(43) Date de publication de la demande: 29.07.1992
(73) Titulaire: ALCATEL N.V., NL-1077 XX Amsterdam (NL)
(72) Inventeur: Audoin, Olivier, F-91600 Savigny sur Orge (FR); Gabriagues, Jean-Michel, F-91530 Le Val Saint Germain (FR); Sotom, Michel, F-91140 Villebon Sur Yvette (FR)
(74) Mandataire: Bourely, Paul

(56) Documents cités:
- EP-A- 0 381 102
- CONFERENCE RECORD, IEEE/IEICE GLOBAL TELECOMMUNICATIONS CONFERENCE 1987, Tokyo, 15-18 novembre 1987, vol. 1, pages 699-703; K. KIKUCHI et al.: "AM sideband injection locking of semiconductor lasers for FDM coherent optical communication systems"
- TECHNICAL DIGEST, EUROPEAN CONFERENCE ON OPTICAL COMMUNICATION, Helsinki, 13-17 septembre 1987, vol. 1, pages 317-320; C. CASPAR et al.: "Automatic switching system in optical heterodyne technique"
- CONFERENCE RECORD, IEEE INTERNATIONAL CONFERENCE ON COMMUNICATIONS '88, Philadelphia, PA, 12-15 juin 1988, vol. 3, pages 1210-1218; L.G. KAZOVSKY et al.: "Multichannel coherent lightwave technology"

## Description

La présente invention concerne notamment la réalisation d'un réseau de communication sur fibres optiques. Un réseau selon l'invention peut comporter certains éléments qui lui sont alors communs, quant à leurs fonctions indiquées ci-après, avec un premier réseau connu. Ces éléments incluent :
- une pluralité de terminaux associés respectivement à autant de périphériques entre lesquels des messages doivent être transmis,
- deux fibres optiques associées à chacun desdits terminaux pour guider des ondes optiques, ces fibres étant une fibre d'émission pour guider des ondes d'émission émises à une fréquence d'émission de ce terminal, et une fibre de réception pour guider des ondes reçues par ce terminal,
- et un coupleur en étoile pour recevoir les ondes optiques lui parvenant par lesdites fibres d'émission, et pour transmettre chacune de ces ondes optiques vers tous ces terminaux par lesdites fibres de réception.

Les fréquences d'émission des divers terminaux varient au cours du temps. Mais pour éviter une diaphonie, elles doivent rester différentes et séparées par des distances spectrales au moins égales à un incrément de fréquence. Ce dernier est choisi pour réserver pour chaque communication, dans le domaine spectral du réseau, un canal de message de largeur suffisante. Ces fréquences forment donc, à partir d'une fréquence de base, une succession qui sera appelée ci-après pile et qui s'étend jusqu'à un sommet de pile. A cette succession correspondent la succession des canaux de message qui comportent ces fréquences, ainsi que la succession des terminaux qui utilisent ces fréquences. Dans chacune de ces successions un élément peut, par rapport à un autre, être adjacent, c'est-à-dire précédent ou suivant. Le sommet de pile est constitué par l'une des fréquences d'émission, ou, dans le cas d'une communication réalisée sur plusieurs fréquences, par un groupe de telles fréquences adjacentes, cette ou ces fréquences étant les plus éloignées de la fréquence de base.

Les divers terminaux peuvent être identiques les uns aux autres. C'est pourquoi, pour faciliter la description du fonctionnement d'un tel réseau on considérera parfois ci-après plus particulièrement l'un de ces terminaux, qui peut être constitué par chacun d'entre eux et qui sera appelé "le terminal considéré".

Ledit premier réseau connu est décrit dans un premier document antérieur constitué par la demande de brevet européen EP-A-381 102 (F°16761). Ce document indique comment est établie la fréquence d'émission du terminal considéré lorsqu'il se prépare à entrer en communication. Cette fréquence est établie par un '"appui". Un tel "appui" consiste en ce que le terminal considéré établit sa fréquence d'émission par rapport à une fréquence d'appui, de manière que la distance spectrale entre cette fréquence d'émission et cette fréquence d'appui soit égale au dit incrément de fréquence. Cet appui est si possible bilatéral c'est-à-dire pris sur deux fréquences d'appui constituées par deux fréquences d'émission séparées par le double de l'incrément de fréquence. Ces fréquences deviennent alors adjacentes à la fréquence d'émission du terminal considéré et constituent deux fréquences d'appui inférieur et supérieur précédant et suivant cette fréquence d'émission. En cas d'absence de l'une de ces fréquences d'appui l'appui se fait sur la fréquence d'appui unique qui est détectée et qui peut être indifféremment la fréquence d'appui supérieur ou la fréquence d'appui inférieur du terminal considéré. La fréquence d'émission de ce dernier reste ensuite invariable, du moins en principe, tant que ce terminal est en émission, même lorsque les deux terminaux adjacents ont cessé d'émettre. Il en résulte que, à chaque instant, certains seulement des canaux de message du réseau sont occupés par la transmission d'un message, certains autres de ces canaux étant, sauf exception, inoccupés au même instant. Le domaine spectral du réseau doit inclure ces canaux inoccupés. Il peut avoir une étendue importante si le nombre des terminaux et si la largeur spectrale des messages sont importants.

Ce document antérieur mentionne que, dans le cas où les deux terminaux adjacents cessent d'émettre, la fréquence du terminal considéré peut dériver jusqu'à venir s'appuyer sur celle d'un autre terminal qui est alors en émission, ou sur une fréquence de base fixe. Une dérive lente et contrôlée des fréquences d'émission pourrait alors pousser systématiquement une pile, formée par ces fréquences, vers une extrémité prédéterminée du domaine spectral du réseau.

Mais aucun moyen n'a été proposé pour réaliser utilement une telle dérive.

Dans ce premier réseau connu l'établissement de la fréquence d'émission du terminal considéré est réalisée à la suite d'un balayage du domaine spectral du réseau. Ce balayage est effectué par ce terminal lui même préalablement à toute communication. Il lui permet de repérer les fréquences d'émission possibles qui sont inoccupées et donc disponibles pour l'émission du message à transmettre. Une fréquence d'émission ainsi repérée est sélectionnée et d'abord utilisée pour envoyer une signalisation d'appel qui comporte, au moins, une adresse du terminal appelé. La durée de ce balayage augmente le temps d'accès des terminaux au réseau, c'est-à-dire le temps qui s'écoule en moyenne entre l'instant où un terminal reçoit du périphérique associé une instruction de transmission d'un message et l'instant où cette transmission commence.

Un deuxième réseau connu est décrit dans un deuxième document antérieur qui est un article : "Protocols for very high-speed optical fiber local area networks using a passive star topology" - (ISAM M.I. HABBAB, MOHSEN KAVEHRAD, and CARL-ERIK W. SUNDBERG - Journal of lightwave technology, vol. LT-5, N° 12. december 1987, p.1782-1793).

Le domaine spectral de ce deuxième réseau connu comporte une pluralité de canaux de message ainsi qu'un canal de signalisation dont les positions sont apparemment prédéterminées. Ce dernier canal est réservé pour la transmission de signalisations permettant notamment à un terminal appelant d'indiquer au terminal appelé un canal de message qui sera utilisé pour la communication.

La présente invention a notamment les buts suivants :
- Faciliter la réalisation et l'exploitation d'un réseau de communication sur fibres optiques avec multiplexage en fréquences.
- Limiter l'étendue du domaine spectral d'un tel réseau.
- Limiter le temps d'accès d'un terminal au réseau.

Et, dans ces buts, elle a notamment pour objet un procédé de communication sur fibres optiques avec multiplexage en fréquences, procédé dans lequel des fréquences d'émission utilisées comme fréquences porteuses pour des communications simultanées forment une pile dans laquelle elles se succèdent à partir d'une fréquence de base jusqu'à un sommet de pile en étant séparées les unes des autres par des distances spectrales au moins égales à un incrément dans cette pile prédéterminée, ce procédé étant caractérisé par le fait que, préalablement à chaque communication, chaque fréquence d'émission devant être utilisée pour cette communication est amenée en sommet de pile puis, pendant cette communication, cette fréquence d'émission est maintenue par asservissement à une distance spectrale égale audit incrément de fréquence au delà d'une fréquence d'appui inférieur propre à cette fréquence d'émission, ceci lorsque une telle fréquence d'appui inférieur peut être détectée pour réaliser cet asservissement, cette fréquence d'émission étant décalée progressivement vers ladite fréquence de base lorsqu'aucune dite fréquence d'appui inférieur ne peut être détectée.

L'invention a aussi pour objet un réseau selon la revendication 2, comportant des moyens pour mettre en oeuvre ce procédé.

Plus précisément, dans un procédé selon la présente invention, préalablement à chaque communication, on amène en sommet de pile la ou les fréquences d'émission des terminaux qui doivent prendre part à la communication et qui incluent, par exemple, le terminal considéré. Puis pendant toute la durée où le terminal considéré est en communication, il détecte la présence ou l'absence d'une onde d'appui inférieur de ce terminal. Cette onde, si elle existe, est une onde optique qui est présente sur la fibre de réception de ce terminal et dont la fréquence constitue pour ce terminal une fréquence d'appui inférieur dont la distance spectrale par rapport à la fréquence d'émission de ce terminal constitue une distance d'appui. Pour constituer une telle distance une distance spectrale doit être comprise dans un intervalle d'appui prédéterminé qui comporte au moins ledit incrément de fréquence. Cet intervalle peut aussi comporter des distances spectrales qui peuvent s'écarter de cet incrément mais doivent rester telles que des moyens d'asservissement de position du terminal considéré peuvent modifier sa fréquence d'émission pour rapprocher cette distance d'appui dudit incrément de fréquence. L'onde d'appui inférieur du terminal considéré peut être notamment constituée par l'onde d'émission du terminal précédent. Lorsqu'il détecte la présence d'une onde d'appui inférieur le terminal considéré utilise ses moyens d'asservissement de position pour asservir sa distance d'appui à l'incrément de fréquence. Il décale progressivement sa fréquence d'émission vers la fréquence de base en cas d'absence d'une telle onde.

A l'aide des figures schématiques ci-jointes, on va décrire ci-après comment la présente invention peut être mise en oeuvre, étant entendu que les éléments et dispositions mentionnés et représentés ne le sont qu'à titre d'exemples non limitatifs. Lorsqu'un même élément est représenté sur plusieurs figures il y est désigné par le même signe de référence.

La figure 1 représente une vue d'ensemble commune, notamment, à un premier et à un deuxième réseaux donnés en exemple de mise en oeuvre de la présente invention.

La figure 2 représente le schéma par blocs d'un terminal de ce premier réseau.

La figure 3 représente le schéma par blocs d'un bloc de gestion appartenant au même réseau.

La figure 4 représente le spectre de certaines des ondes optiques présentes sur ce premier réseau.

La figure 5 représente le spectre de certaines des ondes optiques qui sont présentes sur la fibre de réception d'un terminal qui appartient à ce premier réseau.

La figure 6 représente le spectre des ondes optiques de la figure 5 après mélange de ces ondes avec les ondes optiques émises par l'émetteur de ce même terminal.

La figure 7 représente le spectre des signaux électriques résultant de la détection des ondes optiques de la figure 6 pour permettre l'asservissement de la position spectrale de l'émetteur du terminal de la figure 2.

La figure 8 représente le spectre des ondes optiques de la figure 5 après mélange de ces ondes avec l'onde optique émise par l'oscillateur local du terminal de la figure 2.

La figure 9 représente le spectre des signaux électriques résultant de la détection des ondes optiques de la figure 8 pour permettre l'asservissement de la fréquence de l'oscillateur local du terminal de la figure 2.

La figure 10 représente le schéma par blocs d'un terminal du deuxième réseau donné en exemple de mise en oeuvre de la présente invention.

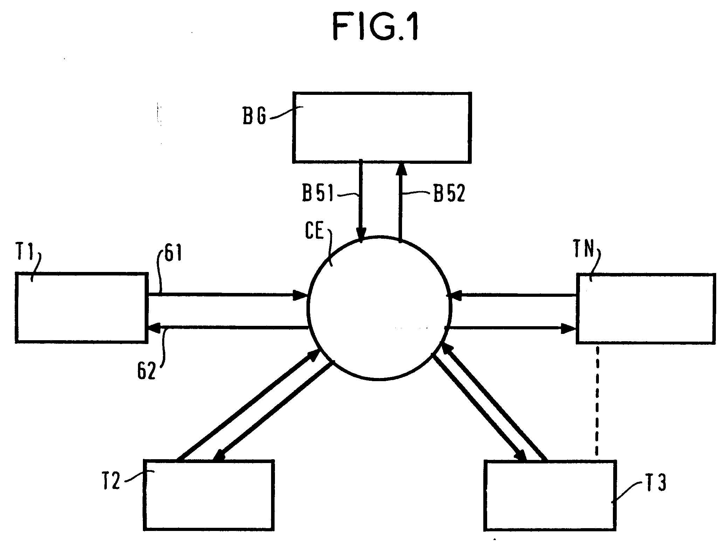

On va tout d'abord rappeler, à l'aide de la figure 1, la structure générale commune aux réseaux de ce genre. Un tel réseau comporte les élément suivants :
- une pluralité de terminaux (T1, T2, T3...TN) associés respectivement à autant de périphériques entre lesquels des messages doivent être transmis,
- deux fibres optiques associées à chacun desdits terminaux (T1) pour guider des ondes optiques, ces fibres étant une fibre d'émission (61) pour guider des ondes d'émission émises à une fréquence d'émission de ce terminal, et une fibre de réception (62) pour guider des ondes qui doivent être reçues par ce terminal,
- et un coupleur en étoile (CE) pour recevoir les ondes optiques lui parvenant par lesdites fibres d'émission, et pour transmettre chacune de ces ondes optiques vers tous ces terminaux par lesdites fibres de réception.

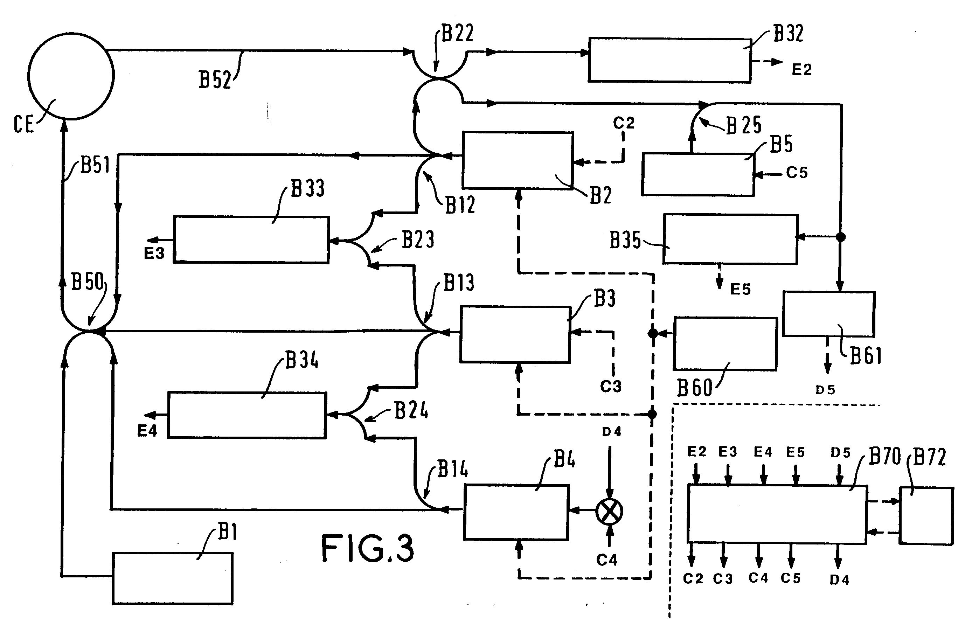

Un bloc de gestion BG comporte un générateur de base (B1) qui est représenté à la figure 3 et qui émet une onde de base de nature optique à une fréquence de base (F0) pour constituer une référence de fréquence pour la commande desdites fréquences d'émission.

Dans un tel réseau chacun des terminaux est tantôt libre, tantôt occupé. Lorsqu'il est occupé il peut être préappelant et/ou préappelé puis appelant et/ou appelé.

Un terminal est appelant et en émission lorsqu'il transmet un message à un terminal appelé sous la forme d'une modulation informative sur une onde porteuse de nature optique qui constitue une onde d'émission de ce terminal et qui est émise pendant une durée de communication. On considérera ci-après que la fréquence propre de cette onde porteuse constitue à la fois une fréquence d'émission et une position spectrale de ce terminal et une fréquence de transmission de ce message. Elle varie sur commande dans un domaine spectral du réseau. Sa position dans ce domaine peut être définie à partir de la fréquence de base. Lorsqu'on dira ci-après que cette fréquence de transmission est, à un instant donné, plus ou moins proche ou plus ou moins éloignée ou est, au cours du temps, rapprochée ou éloignée il s'agira de la proximité ou de l'éloignement de cette fréquence de transmission à partir de cette fréquence de base. Pour simplifier certaines explications on considérera parfois plus particulièrement le cas où la fréquence de base est inférieure aux fréquences d'émission, les mots tels que supérieur ou inférieur appliqués à des fréquences se référant à ce cas. Les fréquences de l'onde d'émission modulée sont comprises dans un canal de message qui est réservé, au sein du domaine spectral du réseau, pour la transmission d'un message et qui présente pour cela une largeur spectrale de message. Cette onde est reçue par le terminal appelé et constitue pour lui une onde de réception dont la fréquence propre est une fréquence de réception. Ce terminal est alors en réception. Les terminaux appelant et appelé sont appariés en formant une paire de terminaux en communication.

La communication peut être unidirectionnelle. Un seul message est alors transmis. Il l'est à partir du terminal appelant vers le terminal appelé. La communication peut aussi être bidirectionnelle. Dans ce cas elle peut être réalisée dans le mode dit "alternat". Les terminaux appelant et appelé prennent alors une même position spectrale et un même canal de message est occupé par des messages aller et retour qui se succèdent au cours du temps. Une communicatioin bidirectionnelle peut aussi être réalisée dans le mode dit "duplex". Le message précédemment mentionné constitue alors un message aller occupant un canal de message aller. Le terminal appelé est apte à émettre, en réponse à ce message et au cours de la même durée de communication, un message retour. Ce dernier est transmis au terminal appelant sur une onde optique porteuse qui occupe un canal de message retour et constitue une onde d'émission pour le terminal appelé et une onde de réception pour le terminal appelant. L'ensemble des deux canaux de message aller et retour constitue une communication.

Un terminal libre devient préappelant lorsque, en réponse à un ordre du périphérique qui lui est associé, il prépare ou émet une signalisation d'appel comportant l'adresse d'un terminal préappelé en vue de la réalisation prochaine d'une communication au cours de laquelle ces terminaux préappelant et préappelé seront appelant et appelé, respectivement.

On va maintenant énoncer de manière générale diverses dispositions qui ont été trouvées avantageuses, notamment selon la présente invention, pour la réalisation de réseaux de ce genre. Ces dispositions sont adoptées dans les deux réseaux donnés en exemple et seront mieux comprises lorsque ces réseaux seront ensuite décrits de manière plus concrète.

Les terminaux du réseau sont semblables les uns aux autres. C'est pourquoi on va d'abord considérer un seul d'entre eux pour préciser sa structure interne. Selon une disposition commune au premier réseau connu précédemment mentionné et aux deux réseaux donnés en exemple de mise en oeuvre de la présente invention, le terminal considéré comporte les éléments suivants :
- Un émetteur (1) commandable au moins en fréquence pour émettre ladite onde d'émission et pour appliquer une modulation informative à cette onde.
- Des moyens de positionnement d'émission pour positionner la fréquence d'émission de cet émetteur dans un domaine spectral du réseau, en formant une pile de fréquences d'émission qui sont variables et qui se succèdent à partir d'une fréquence de base fixe jusqu'à un sommet de pile en étant séparées les unes des autres par des distances spectrales au moins égales à un incrément de fréquence prédéterminé.
- Des moyens de réception pour démoduler certaines des ondes reçues par le terminal considéré.
- Et un circuit de commande (40) pour commander cet émetteur, ces moyens de positionnement d'émission et ces moyens de réception.

Les moyens de positionnement d'émission des terminaux sont tels que leurs fréquences d'émission forment une succession de fréquences à intervalles bornés inférieurement dans laquelle chaque fréquence suivante est séparée d'une fréquence précédente par une distance interterminaux qui ne peut pas descendre sensiblement au-dessous d'un incrément de fréquence prédéterminé (DF) supérieur à ladite largeur spectrale de message. C'est pourquoi ceux du terminal considéré comportent des moyens d'appui d'émission comportant eux-mêmes les éléments suivants :
- Un mélangeur de positionnement d'émission (31) pour mélanger les ondes reçues par le terminal considéré avec une onde locale de positionnement d'émission qui a une fréquence locale de positionnement d'émission (F(2P-1)A) dans le domaine optique et qui est fournie sur une entrée locale (31A) de ce mélangeur à partir de l'émetteur (1) de ce terminal pour représenter sa fréquence d'émission (F(2P-1)).
- Un détecteur de positionnement d'émission (10) alimenté par ledit mélangeur de positionnement d'émission pour former des signaux de battement de nature électrique résultant chacun du mélange de ladite onde locale de positionnement d'émission avec l'une desdites ondes reçues qui correspond à ce signal, l'un au moins de ces signaux constituant un signal de battement de positionnement d'émission (F(2P-2)BE) si celle desdites ondes reçues qui lui correspond constitue une onde externe de positionnement d'émission (F(2P-2)B) définissant une fréquence d'appui (F(2P-2) du terminal considéré, la fréquence de ce signal constituant une fréquence de battement de positionnement d'émission (F(2P-1)A-F(2P-2)B) qui définit une distance d'appui (F(2P-1)-F(2P-2)) entre ces fréquences d'émission (F(2P-1)) et d'appui (F(2P-2)), une dite onde reçue ne constituant cette onde externe de positionnement que si cette distance d'appui est située dans un intervalle d'appui prédéterminé comportant ledit incrément de fréquence (DF).
- Un discriminateur de position d'émission (11) pour recevoir ledit signal de battement de position d'émission et fournir en réponse un signal de position d'émission représentatif d'un écart de position d'émission égal à la différence entre ladite fréquence de battement de positionnement d'émission (F(2P-1)A-F(2P-2)B) et une fréquence de consigne de positionnement d'émission (DF-2FS) telle que l'annulation de cet écart implique que la différence entre lesdites fréquences d'émission (F(2P-1)) et d'appui (F(2P-2)) du terminal considéré soit égale au dit incrément de fréquence (DF).
- Et des moyens de commande de position d'émission (40) qui commandent ladite fréquence d'émission de ce terminal en réponse audit signal d'écart de position d'émission pour rendre ladite fréquence de battement de positionnement d'émission égale à ladite fréquence de consigne de positionnement d'émission.

Si le terminal considéré est à des distances spectrales à peu près égales à l'incrément DF en même temps d'un terminal précédent et d'un terminal suivant, le détecteur 10 fournit deux signaux de battement de positionnement d'émission.

C'est pourquoi, selon une disposition avantageuse, le discriminateur de position d'émission (11) comporte un filtre de positionnement d'émission pour sélectionner et superposer deux dits signaux de battement de positionnement d'émission, ce filtre présentant une fréquence propre égale à ladite fréquence de consigne de positionnement d'émission et une bande passante étroite centrée sur cette fréquence, ledit signal de position d'émission étant représentatif de la puissance du signal de sortie de ce filtre, et lesdits moyens de commande de position d'émission (40) commandant ladite fréquence d'émission (F(2P-1)) de ce terminal pour rendre cette amplitude maximale.

Les moyens de réception peuvent être du type hétérodyne et comporter les éléments suivants :
- Un oscillateur local (2) pour fournir une onde locale de réception qui est de nature optique et dont la fréquence est commandable et constitue une fréquence locale de réception (L(2P-1)) du terminal considéré.
- Un mélangeur d'hétérodynage (32) recevant d'une part lesdites ondes reçues par le terminal considéré, une telle onde constituant une dite onde de réception ayant une dite fréquence de réception (F(2p)) pour le terminal considéré lorsque le message porté par cette onde est à transmettre à ce terminal, ce mélangeur recevant d'autre part ladite onde locale de réception et mélangeant cette onde avec lesdites ondes reçues.
- Un détecteur d'hétérodynage (20) alimenté par ledit mélangeur d'hétérodynage pour fournir des signaux de battement de nature électrique dont l'un est un signal de battement de réception (K(2P)H) présentant une fréquence de battement de réception qui est la différence entre lesdites fréquences de réception et locale de réception et qui est voisine d'une fréquence intermédiaire prédéterminée (FI).
- Un filtre de démodulation (22) pour recevoir ce signal de battement de réception, pour le démoduler, et pour fournir un signal démodulé représentatif d'une dite information qui était à transmettre au terminal considéré et qui était portée par ladite onde de réception.
- Un discriminateur de fréquence constituant un discriminateur de position de réception (21) pour recevoir ce signal de battement de réception et pour fournir en réponse un signal d'erreur de position de réception représentatif de la différence entre ladite fréquence de battement de réception et ladite fréquence intermédiaire (FI).
- Et des moyens de commande de position de réception (40) qui commandent ladite fréquence locale de réception en réponse au dit signal d'erreur de position de réception pour rendre ladite fréquence de battement de réception égale à ladite fréquence intermédiaire.

Le circuit de commande du terminal considéré est relié au périphérique associé à ce terminal pour en recevoir un message à transmettre. Il comporte des moyens de modulation qui commandent en conséquence l'émetteur de ce terminal pour réaliser ladite modulation informative de l'onde d'émission lorsque le terminal considéré est en émission. Il comporte lesdits moyens de commande de position d'émission. Il reçoit ledit signal démodulé et comporte des moyens de reconnaissance d'adresse pour reconnaître l'adresse du terminal considéré. Il place ce terminal en réception lorsque cette adresse a été reconnue et transmet ensuite le message reçu au périphérique associé. Il reçoit ledit signal de battement de réception et comporte lesdits moyens de commande de position de réception.

Le terminal considéré est de plus, apte à émettre et à recevoir des signalisations ayant la forme de modulations affectant des ondes porteuses optiques qui sont guidées par lesdites fibres d'émission et de réception de ce terminal et qui sont transmises par ledit coupleur en étoile. Ces signalisations comportent une signalisation d'appel qui est émise par ce terminal lorsqu'il est préappelant et qui comporte l'adresse du terminal préappelé.

Selon une disposition avantageuse dite de compression de pile, le circuit de commande du terminal considéré est prêt de manière permanente, c'est-à-dire pendant toute la durée de communication, à faire varier la fréquence d'émission de ce terminal.

Une telle variation est effectuée si une fréquence d'appui inférieur de ce terminal qui sera définie ci-après se rapproche de la fréquence de base. Dans ce cas la fréquence d'émission du terminal considéré accompagne le déplacement de cette fréquence d'appui. Une telle variation est aussi effectuée si une telle fréquence d'appui inférieur antérieurement utilisée disparait. Dans ce cas la fréquence d'émission se rapproche progressivement de la fréquence de base jusqu'à ce qu'une nouvelle fréquence d'appui inférieur puisse être définie. Cette nouvelle fréquence d'appui inférieur peut être la fréquence d'émission d'un terminal précédent, si un tel terminal existe, ou la fréquence de base elle-même.

Les moyens de positionnement d'émission du terminal considéré lui permettent d'assurer ces fonctions à l'aide des éléments précédemment indiqués sauf que les moyens de commande de position d'émission comportent pour cela des moyens de compression de pile qui peuvent être incorporés au circuit de commande de ce terminal et qui sont les suivants :
- Des moyens de positionnement initial d'émission qui sont mis en action lorsque le terminal considéré devient libre ou tout au moins avant le début d'une nouvelle communication. Ces moyens aménent la fréquence d'émission actuelle du terminal considéré au sommet de la pile des fréquences d'émission des divers terminaux.
   Ils peuvent par exemple éloigner cette fréquence progressivement à partir de la fréquence d'émission précédemment utilisée jusqu'à ce qu'ils détectent l'arrivée de cette fréquence d'émission effective au sommet de la pile.
- Des moyens de détection d'appui inférieur pour détecter la présence éventuelle, parmi les ondes reçues par le terminal considéré, d'une onde externe de positionnement inférieur d'émission constituée par une dite onde externe de positionnement d'émission définissant une fréquence d'appui inférieur de ce terminal. Une telle fréquence est une dite fréquence d'appui de ce terminal à condition que cette fréquence d'appui soit plus proche de la fréquence de base que la fréquence d'émission de ce terminal. Ces moyens fournissent un signal de perte d'appui inférieur lorsqu'une telle onde externe de positionnement inférieur d'émission n'existe plus.
- Des moyens d'asservissement de position d'émission en cours de communication qui sont maintenus en action en cours de communication tant qu'existe une dite fréquence d'appui inférieur du terminal considéré. Ces moyens sont desdits moyens d'appui d'émission qui commandent la fréquence d'émission de ce terminal de la manière précédemment indiquée pour annuler ledit écart de position d'émission.
- Et des moyens de décalage d'émission qui sont mis en action en cours de communication lorsque un dit signal de perte d'appui inférieur du terminal considéré est fourni. Ces moyens rapprochent progressivement la fréquence d'émission de ce terminal de la fréquence de base jusqu'à ce ce signal de perte d'appui inférieur ne soit plus fourni.

Ce rapprochement est effectué à une vitesse de décalage qui est choisie de préférence grande. Mais cette vitesse doit être suffisamment petite pour permettre aux moyens d'asservissement de position d'émission d'un terminal suivant de suivre la variation de cette fréquence. Ceci est nécessaire parce que cette fréquence constitue la fréquence d'appui inférieur de ce terminal suivant.

On réalise ainsi une pile des fréquences d'émission des divers terminaux à partir de la fréquence de base. Ces fréquences se succèdent avec des intervalles dont beaucoup sont des intervalles normaux égaux audit incrément de fréquence. Un intervalle de fréquences accru apparaît lorsque la transmission d'un message par un terminal se termine. Dans ce cas le terminal suivant ne peut plus définir une fréquence d'appui inférieur. Il décale alors progressivement et régulièrement sa fréquence d'émission vers la fréquence de base pendant une durée de décalage qui constitue une fraction de ladite durée de communication et qui se termine soit lorsqu'une nouvelle fréquence d'appui inférieur peut être définie soit lorsque la communication est terminée. Si la vitesse de décalage de fréquence est choisie suffisamment grande, cette durée de décalage est suffisamment petite pour que l'existence des intervalles de fréquence accrus n'augmente que dans une faible proportion l'étendue nécessaire du domaine spectral du réseau.

Selon une autre disposition avantageuse, lesdits moyens de détection d'appui inférieur du terminal considéré comportent les éléments suivants :
- Des moyens de détection non sélective d'appui pour fournir un signal de perte d'appui lorsque une dite onde externe de positionnement d'émission de ce terminal n'existe plus. Ces moyens peuvent par exemple pour cela surveiller ledit signal de position d'émission qui est représentatif de la puissance du signal de battement de positionnement d'émission. Une décroissance prédéterminée telle qu'une chute rapide d'environ 50% de cette puissance indique que soit une onde externe de positionnement inférieur d'émission soit une onde externe de positionnement supérieur d'émission a disparu. Ces moyens déclenchent alors la fourniture du signal de perte d'appui.
- Et des moyens de discrimination d'appui qui sont mis en oeuvre au moins lorsque ledit signal de perte d'appui est fourni et qui fournissent alors ledit signal de perte d'appui inférieur si l'onde externe de positionnement d'émission qui a disparu était une dite onde externe de positionnement inférieur d'émission.

Les deux réseaux donnés en exemple différent l'un de l'autre quant à la structure de ces moyens de discrimination d'appui. Le premier de ces réseaux fonctionne dans le mode duplex. Il en résulte que, lorsque le terminal considéré participe à une communication, celle-ci utilise deux fréquences d'émission adjacentes et que ce terminal émet soit sur la fréquence inférieure soit sur la fréquence supérieure de la communication. Il constitue alors soit le terminal inférieur soit le terminal supérieur de la paire de terminaux en communication, respectivement, étant entendu que le terminal inférieur est celui qui précéde l'autre terminal de cette paire dans la succession des terminaux correspondant à la pile des fréquences d'émission. Dans ce premier réseau donné en exemple le terminal inférieur est le terminal appelant mais on comprendra que ce pourrait être tout aussi bien le terminal appelé.

Selon une disposition avantageuse les moyens de discrimination d'appui du terminal considéré d'un réseau fonctionnant en mode duplex enregistrent, en début de chaque communication et jusqu'à la fin de cette communication un bit de position relative représentatif du fait que le terminal considéré est appelant ou appelé et est par conséquent inférieur ou supérieur dans une paire de terminaux au cours de cette communication. Ces moyens fournissent une indication d'infériorité si ce terminal est le terminal inférieur de cette paire. Ledit signal de perte d'appui inférieur est fourni lorsque ledit signal de perte d'appui et ladite indication d'infériorité sont simultanément fournis.

Il en résulte que la paire de terminaux considérée, c'est-à-dire celle incluant le terminal considéré au cours d'une communication considérée, va décaler ses deux fréquences d'émission vers la fréquence de base si la communication précédente disparait, et au contraire que les deux fréquences d'émission de la paire considérée resteront inchangées si c'est la communication suivante qui disparait.

Il doit être compris qu'en pratique les divers moyens que comportent le circuit de commande sont avantageusement réalisés sous la forme d'éléments de programmes incorporés à ce circuit.

Selon une autre disposition avantageuse le réseau comporte un générateur de marquage pour réaliser, à un instant de marquage, un marquage préalable d'une ou plusieurs positions spectrales qui sont marquées pour être utilisées au cours d'une prochaine communication. Ces positions marquées sont des positions spectrales qui ne sont prises par aucun des terminaux du réseau à l'instant de marquage et qui doivent être prises par un ou plusieurs de ces terminaux pour réaliser la prochaine communication c'est-à-dire la première communication qui débutera sur le réseau à partir de cet instant.

Un tel marquage préalable présente l'avantage de diminuer le temps d'accès au réseau.

Le générateur de marquage peut avoir une structure analogue à celle du terminal considéré, sauf qu'aucune modulation informative n'est nécessaire sur les ondes optiques qu'il émet, puisque la seule fonction de ces ondes est de définir des fréquences.

Il comporte les éléments suivants :
- Deux fibres d'émission (B51) et de réception (52) pour le relier audit coupleur en étoile (CE) comme le terminal considéré.
- Au moins un émetteur de marquage (B2) commandable en fréquence pour émettre sur cette fibre d'émission une onde de marquage (FM1) de nature optique.
- Et des moyens de positionnement de marquage (B22, B32, B70) commandant l'émetteur de marquage pour donner à l'onde de marquage une fréquence de marquage (FM1) présentant une relation prédéterminée avec une position spectrale qui devra être prise, pour réaliser une prochaine communication, par un terminal participant à cette communication et qui est ainsi marquée par cette onde de marquage.

Cette relation prédéterminée est telle que l'onde de marquage facilite et/ou accélère le déplacement que la fréquence d'émission dudit terminal participant devra effectuer pour atteindre la position spectrale marquée.

A titre d'exemples de telles relations prédéterminées la fréquence de marquage peut coïncider avec la position marquée ou être située, par rapport à cette position marquée, à une distance spectrale prédéterminée liée au dit incrément de fréquence.

Bien entendu, lorsque le réseau comporte les moyens de compression de pile précédemment mentionnés, la ou les positions marquées par le ou les générateurs de marquage sont situées en sommet de pile comme cela apparaîtra ci-après.

Selon une autre disposition avantageuse le réseau comporte un générateur de référence de signalisation comportant lui-même :
- un émetteur de signalisation (B4) commandable en fréquence pour émettre une onde optique qui constitue une onde de référence de signalisation à une fréquence de signalisation (FZ),
- des moyens de positionnement de signalisation comportant des moyens d'asservissement de position de signalisation et des moyens de décalage de position de signalisation pour positionner ladite fréquence de signalisation dans le domaine spectral du réseau,
- une fibre d'émission (B51) pour guider ladite onde de référence de signalisation jusqu'au dit coupleur en étoile (CE),
- et une fibre de réception (B52) pour guider des ondes optiques qui ont été transmises à ce coupleur et qui sont reçues par ce générateur.

Ces moyens d'asservissement de position de signalisation sont analogues à ceux du terminal considéré et comportent les éléments suivants :
- Un mélangeur de positionnement de signalisation (B24) pour recevoir d'une part lesdites ondes reçues par le générateur de référence de signalisation et d'autre part une onde locale de positionnement de signalisation de nature optique définissant ladite fréquence de signalisation.
- Un récepteur de positionnement de signalisation (B34) alimenté par ledit mélangeur de positionnement de signalisation pour former des signaux de battement de nature électrique dont l'un est un signal de battement de positionnement de signalisation résultant du mélange de ladite onde locale de positionnement de signalisation avec une onde externe de positionnement de signalisation constituée par une dite onde reçue définissant une fréquence d'appui de signalisation qui est la fréquence la plus éloignée dans la pile desdites fréquences d'émission, la fréquence de ce signal constituant une fréquence de battement de positionnement de signalisation comprise dans un intervalle prédéterminé et représentative d'une distance spectrale entre ces fréquences de signalisation et d'appui de signalisation.
- Un discriminateur de position de signalisation non représenté pour recevoir ce signal de battement de positionnement de signalisation et pour fournir en réponse un signal de position de signalisation représentatif de la différence entre cette fréquence de battement de positionnement de signalisation et une fréquence prédéterminée.
- Et des moyens de commande de fréquence de signalisation (B70) qui commandent ladite fréquence de signalisation en réponse audit signal de position de signalisation pour asservir la distance spectrale entre cette fréquence de signalisation et ladite fréquence d'appui de signalisation à un supplément de distance spectrale prédéterminé qui constitue un supplément de signalisation.

Les moyens de décalage de position de signalisation éloignent la fréquence de signalisation lorsqu'une nouvelle communication est établie, ceci sur une distance de décalage qui est égale à un nombre d'incréments de fréquence égal au nombre des fréquences d'émission qui sont utilisées pour cette nouvelle communication.

Les moyens de positionnement d'émission du terminal considéré comportent alors en association avec son dit circuit de commande :
- des moyens de recherche de signalisation pour éloigner progressivement sa fréquence d'émission de la fréquence de base lorsque ce terminal devient libre, et pour reconnaître la coïncidence de cette fréquence d'émission avec ladite fréquence de signalisation,
- et des moyens d'asservissement d'attente commandés par ces moyens de recherche de signalisation pour asservir cette fréquence d'émission à cette fréquence de signalisation à partir du moment où une coïncidence a été reconnue entre ces deux fréquences.

Cette disposition présente l'avantage que le temps d'accès au réseau est diminué par le fait que, lorsque le terminal considéré est libre, sa position spectrale est au moins proche de celle qu'il occupera lors de sa prochaine communication.

Le circuit de commande (40) du terminal considéré comporte en outre des moyens de signalisation d'appel pour moduler ladite onde d'émission ayant ladite fréquence de signalisation par une signalisation d'appel et pour émettre cette signalisation lorsqu'un message doit être transmis par ce terminal, les fréquences de l'onde d'émission ainsi modulée occupant un canal de signalisation (KZ) ayant une largeur spectrale de signalisation.

Le terminal considéré comporte en outre des moyens de positionnement initial de réception d'attente (B70) pour amener ladite fréquence locale de ce terminal à une position spectrale dont la distance par rapport à ladite fréquence de signalisation est égale à ladite fréquence intermédiaire lorsque ce terminal est libre de manière que lesdits moyens de réception puisse ensuite recevoir des messages dans le canal de signalisation (KZ).

Lesdits moyens de positionnement d'émission du terminal considéré comportent des moyens de recherche d'émission qui sont mis en action lorsque ce terminal doit passer en émission et qui rapprochent sa fréquence d'émission de ladite fréquence de base à partir de ladite fréquence de signalisation jusqu'à une position de préémission où une dite fréquence d'appui inférieur apparaît pour ce terminal, et des moyens de recherche de réception qui sont mis en action par ce circuit de commande lorsque ce terminal doit passer en réception et qui amènent ladite fréquence locale de réception de ce terminal à une position de préréception dont la distance par rapport à une dite position de préémission d'un terminal est égale à ladite fréquence intermédiaire.

La position de préémission utilisée pour établir cette position de préréception du terminal considéré est la position de préémission de ce même terminal si la communication est réalisée en mode alternat. Si la communication est réalisée en mode duplex, la position de préémission utilisée est celle du terminal qui est apparié au terminal considéré.

Selon une autre disposition avantageuse le générateur de référence de signalisation est inclus dans un bloc de gestion BG. Ce dernier comporte en outre des moyens de réception semblables auxdits moyens de réception du terminal considéré et un circuit de commande qui est analogue audit circuit de commande du terminal considéré sauf que, d'une part, il n'a pas à assurer de communication avec un périphérique associé, d'autre part il a à recevoir, à traiter et à émettre dans le canal de signalisation des signalisations permettant la gestion du réseau.

Selon une autre disposition avantageuse le générateur de référence de signalisation constitue un dit générateur de marquage et comporte en outre pour cela :
- au moins un émetteur de premier marquage (B2) commandable en fréquence pour émettre sur ladite fibre d'émission de ce générateur une onde de premier marquage,
- et des moyens de positionnement de premier marquage pour donner à cette onde une fréquence de premier marquage (FM1). Ces moyens sont analogues aux moyens de positionnement d'émission et comportent les éléments suivants :
- Un mélangeur de positionnement de premier marquage (B22) pour recevoir d'une part lesdites ondes reçues par le générateur de référence de signalisation et d'autre part une onde locale de positionnement de premier marquage de nature optique définissant la fréquence de premier marquage.
- Un détecteur de positionnement de premier marquage (B32) alimenté par le mélangeur de positionnement de premier marquage pour former des signaux de battement de nature électrique dont l'un est un signal de battement de positionnement de premier marquage résultant du mélange de ladite onde locale de positionnement de premier marquage avec une dite onde reçue définissant ladite fréquence d'appui de signalisation (F2P), la fréquence de ce signal constituant une fréquence de battement de positionnement de premier marquage comprise dans un intervalle prédéterminé et représentative d'un intervalle entre ces fréquences de premier marquage et d'appui de signalisation.
- Et un discriminateur de positionnement de premier marquage (non représenté) pour recevoir ce signal de battement de position de premier marquage et pour fournir en réponse un signal de position de premier marquage représentatif de la différence entre ladite fréquence de battement de positionnement de premier marquage et une fréquence prédéterminée.

Le circuit de commande (B70) du générateur de référence de signalisation commande la fréquence de premier marquage en réponse au signal d'erreur de position de premier marquage pour asservir la distance spectrale entre cette fréquence de premier marquage et la fréquence d'appui de signalisation (F2P) au dit incrément de fréquence (DF).

Lorsque le terminal considéré doit passer en réception dans le cadre d'une communication avec un autre terminal qui est positionné sur cette fréquence de premier marquage, l'onde de premier marquage permet au terminal considéré d'asservir sa fréquence locale de réception par rapport à cette fréquence de premier marquage sans avoir à attendre pour cela une émission de cet autre terminal. Si la fréquence de marquage est unique, ledit supplément de signalisation vaut avantageusement le double dudit incrément de fréquence.

Dans le cas d'un fonctionnement en mode duplex où deux canaux de message adjacents sont utilisés pour chaque communication et où le terminal considéré est le terminal supérieur, c'est-à-dire doit occuper le canal supérieur dont la fréquence porteuse est la plus éloignée de la fréquence de base, cette première fréquence de marquage constitue de plus ladite fréquence d'appui inférieur de ce terminal.

Dans ce cas une deuxième fréquence de marquage (FM2) suit la première à une distance égale audit incrément de fréquence. Une onde de deuxième marquage (B3) correspondante est émise par un émetteur de deuxième marquage muni de moyens de positionnement spectral analogues aux précédents. Elle permet le positionnement de la fréquence locale de réception du terminal supérieur et celui de la fréquence de signalisation.

Le supplément de signalisation vaut alors avantageusement le triple dudit incrément de fréquence.

Selon une autre disposition avantageuse les moyens d'asservissement de position d'émission du terminal considéré comportent en outre des moyens d'aide au positionnement spectral qui comportent aux mêmes :
- un générateur d'aide au positionnement (53) pour fournir un signal d'aide au positionnement à une fréquence d'aide au positionnement (FS) prédéterminée,
- et des moyens de modulation d'aide au positionnent (1) pour moduler au moins une fraction de l'onde d'émission du terminal considéré par ce signal d'aide au positionnement de manière à engendrer deux ondes latérales d'aide au positionnement ayant deux fréquences latérales d'aide au positionnement dont la distance spectrale à partir de la fréquence d'émission (F(2P-1)) de ce terminal est égale à ladite fréquence d'aide au positionnement (FS). Une première onde latérale a une première fréquence latérale d'aide au positionnement (F(2P-1)A) plus proche de ladite fréquence d'appui inférieur (F(2P-2)) de ce terminal que sa fréquence d'émission. Elle constitue ladite onde locale de positionnement d'émission transmise audit mélangeur de positionnement d'émission du terminal considéré.

La deuxième onde latérale d'aide au positionnement ainsi formée constitue ladite onde externe de positionnement d'émission pour le terminal suivant le terminal considéré.

La fréquence d'aide au positionnement (FS) est de préférence comprise entre le quart et la moitié dudit incrément de fréquence (DF).

Ces moyens d'aide au positionnement présentent l'avantage que la fréquence de battement de positionnement d'émission peut être très inférieure à la distance d'appui. Elle est par exemple située dans le domaine des hyperfréquences alors que la distance d'appui est sensiblement égale à l'incrément de fréquence qui est situé dans le domaine des fréquences optiques. Le signal de'battement de positionnement d'émission peut alors être traité à l'aide de composants électroniques bien connus et de prix accceptable. Compte tenu de la présence ces moyens d'aide au positionnement, on comprend que lorsqu'il a été précédemment indiqué qu'une onde, un signal ou une première fréquence définissaient une deuxième fréquence ou une distance spectrale telle qu'une distance d'appui, cela signifiait que la deuxième fréquence ou distance ainsi définie était égale à la fréquence définissante augmentée ou diminuée d'une valeur prédéterminée, cette fréquence définissante étant celle de cette onde ou de ce signal ou étant cette première fréquence, cette valeur prédéterminée valent une ou deux fois la fréquence d'aide au positionnement.

Dans les deux réseaux donnés en exemple la fréquence (F(2P-1)A-F(2P-2)B) qui définit la distance d'appui (F(EP-1)-F(EP-2)) est égale à cette distance diminuée de deux fois la fréquence d'aide au positionnement (FS). Compte tenu du fait que cette distance d'appui est sensiblement égale à l'incrément de fréquence (DF), la fréquence qui définit la distance d'appui est sensiblement égale à DF-2FS.

Une autre disposition avantageuse concerne l'utilisation qui peut être faite d'un canal de signalisation qui comporte la fréquence de signalisation et l'ensemble des fréquences occupées par diverses signalisation qui sont transmises sur le réseau pour préparer et gérer les communications et plus généralement pour gérer le réseau.

Ces signalisations sont notamment les suivantes :
- Des signalisations d'appel émises par un terminal préappelant et contenant l'adresse du terminal préappelé.
- Des signalisations d'acquittement d'appel émises par le terminal préappelé en réponse à une signalisation d'appel pour indiquer au terminal préappelant que le terminal préappelé est apte à établir la communication.
- Des signalisations d'allocation de droit à communication qui sont utiles lorsque deux terminaux veulent établir simultanément deux communications sur un même canal et qui définissent alors la communication prioritaire.

L'intérêt de cette disposition apparaît lorsque beaucoup de communications, mais non leur totalité, doivent transmettre en des temps limités des messages qui comportent chacun une grande quantité d'information et que l'on peut appeler "lourds". Il s'agit alors de communications "lourdes" dont le grand débit d'information oblige à donner une grande largeur aux canaux de message alors que d'autres communications, plus "légères", ne nécessitent pas une telle largeur. Selon cette disposition le canal de signalisation est partagé entre les divers terminaux du réseau non seulement pour la transmission desdites signalisations mais aussi pour celle de messages "légers" c'est-à-dire de messages comportant chacun une quantité relativement petite d'information.

Plus précisément le terminal considéré comporte :
- des moyens de classement de messages pour indiquer si un message à transmettre est un message lourd qui doit être transmis avec un débit d'information relativement grand pendant une durée de communication relativement grande ou s'il est un message léger qui peut être transmis avec un débit d'information relativement petit et/ou pendant une durée de communication relativement petite,
- des moyens de transmission de messages lourds pour transmettre lesdits messages lourds dans lesdits canaux de message,
- et des moyens de transmission de message légers pour transmettre lesdits messages légers dans ledit canal de signalisation qui constitue alors un canal partagé entre lesdits terminaux.

Les moyens de classement de messages sont incorporés au circuit de commande 40.

Les moyens de transmission de messages lourds du terminal considéré sont les moyens qui ont été précédemment décrits et qui sont en action lorsque ce terminal est occupé. Ses moyens de transmission de messages légers sont les mêmes moyens sauf qu'ils sont mis en action par son circuit de commande alors que ce terminal est dans une situation qui a été précédemment décrite comme celle d'un terminal libre. Ils sont mis en action dans le cas où le périphérique associé à ce terminal souhaite émettre un message et où ce message est classé comme léger.

Cette disposition permet, sans augmenter excessivement la largeur du canal de signalisation, de diminuer sensiblement le nombre des canaux de message dans le cas où le nombre de messages lourds à transmettre par unité de temps est sensiblement plus petit que celui de l'ensemble des messages. On utilise ainsi plus efficacement le domaine spectral du réseau.

Selon une autre disposition avantageuse, la largeur du canal partagé est sensiblement égale à ladite largeur de message.

Les composants électroniques affectés à l'utilisation du canal partagé peuvent alors être sensiblement les mêmes que ceux qui sont affectés à l'utilisation des canaux de message.

Selon une autre disposition avantageuse, le canal partagé est multiplexé temporellement entre lesdits terminaux ou du moins entre ceux quine sont pas occupés à la transmission d'un message lourd, chacun de ces terminaux transmettant sur ce canal, dans le temps qui lui est affecté au cours de chaque cycle de multiplexage, les messages légers et les signalisations qu'il doit transmettre.

Un protocole d'accès au canal partagé est prévu. Il peut être semblable à des protocoles déjà connus pour l'accès à un canal de signalisation. L'allocation des droits à communication, y compris celle des droits à établir une communication lourde est réalisée d'une manière centralisée dans le bloc de gestion BG qui dialogue pour cela avec les terminaux sur le canal de signalisation. On comprendra cependant qu'une telle allocation pourrait aussi être faite d'une manière décentalisée selon laquelle les communications prioritaires seraient définies par un dialogue entre les terminaux sur le canal de signalisation.

On va maintenant donner une description plus concréte du terminal considéré appartenant au premier réseau donné en exemple. Il s'agit par exemple du terminal T1 représenté à la figure 1. Un coupleur en étoile du réseau est désigné par la référence CE.

Un émetteur 1 et un oscillateur local 2 du terminal considéré sont constitués à l'aide d'au moins deux lasers semi-conducteurs dont les fréquences sont commandées électriquement. Un courant de commande de la fréquence d'émission est fourni par lesdits moyens de positionnement d'émission à travers un circuit de régulation 41.

Un courant de commande de l'intensité optique émise comporte trois composantes :
- une composante continue de polarisation issue du circuit de régulation 41,
- une composante de modulation informative comportant des fréquences relativement basses et constituée par un signal numérique binaire représentatif des informations que le périphérique 50 associé à ce terminal désire transmettre. Ce signal est formé dans un circuit 52 connecté à ce périphérique.
- et une composante de modulation d'aide au positionnement. Cette composante est sinusoïdale. Sa fréquence est plus haute que les fréquences de la composante de modulation informative et constitue une fréquence FS d'aide au positionnement. Cette troisième composante est appliquée à l'émetteur 1 par un générateur d'aide au positionnement 53.

Un interrupteur optique 34 permet d'isoler l'émetteur d'une fibre d'émission 61 pendant le positionnement du terminal. Un coupleur optique 33 prélève une partie de l'onde issue de l'émetteur pour la mélanger, grâce à un autre coupleur optique 31, aux ondes reçues sur une fibre de réception 62. Ce dernier coupleur constitue ledit mélangeur de positionnement d'émission. Le mélange d'ondes en résultant est détecté par un détecteur de positionnement d'émission 10 du type quadratique. Le signal électrique qui en résulte constitue ledit signal de battement de positionnement d'émission. Sa fréquence est mesurée par un discriminateur de position d'émission 11 qui est centré sur la fréquence DF - 2 FS. Ce discriminateur fournit un signal d'erreur de position d'émission pour l'asservissement de l'émetteur.

Un détecteur d'hétérodynage 20 détecte les ondes sortant d'un mélangeur d'hétérodynage qui est contitué par un coupleur optique 32 et qui reçoit les ondes reçues sur la fibre de réception 62 et l'onde émise par l'oscillateur local 2. Un discriminateur de fréquence et de position de réception 21, centré sur une fréquence intermédiaire FI, élabore le signal d'erreur de position de réception qui permet l'asservissement de l'oscillateur local 2. Une démodulation informative est faite à partir du signal détecté en 20. Elle est réalisée par un circuit d'amplification constituant un filtre de démodulation 22 centré sur la fréquence FI et par un régénérateur 51 restituant les données numériques en bande de base au périphérique 50.

L'ensemble du terminal est géré par un circuit de commande 40 qui est constitué par un micro-circuit et qui est relié au périphérique 50 associé à ce terminal.

Le circuit 40 reçoit en entrée les signaux d'erreurs numérisés par un convertisseur analogique-numérique 43. Une mémoire 42 contient en particulier les domaines de fonctionnement des lasers de l'émetteur 1 de l'oscillateur 2, c'est-à-dire un ensemble de valeurs de courants permettant de décrire pas à pas la plage d'accord de ces lasers. Le circuit 40 élabore des signaux de consigne et les transmet à un circuit de régulation 41 qui régule les courants et températures des lasers. Il commande également l'état de l'interrupteur 34 connectant l'émetteur au coupleur en étoile CE.

Il est pour cela doté d'un logiciel constituant les moyens précédemment indiqués et assurant notamment les fonctions suivantes :
- Le calcul des courants d'accord de l'émetteur et de l'oscillateur local en fonction des signaux d'erreurs de position. Il s'agit de rendre maximal le signal issu du discriminateur 11 et d'annuler l'erreur mesurée par le discriminateur 21. La position du terminal dans la pile ou au dessus de celle-ci ne modifie en rien cet asservissement.
- La mise en oeuvre de la compression de pile, cette mise en oeuvre comprenant la détection de la disparition de la communication inférieure au vu des variations de la puissance du signal de battement de positionnement d'émission et la commande du décalage de 2xDF qui doit s'en suivre.
- La prise en compte d'informations de gestion émanant du périphérique : demandes d'appels et adresse du terminal appelé, signaux d'alarmes et de sécurisation indiquant une transmission incorrecte qu'il faut interrompre pour une reprise ultérieure.
- La prise en compte des signalisations en provenance du bloc de gestion, dans le cas où le terminal est sur le canal partagé. Il s'agit en particulier de l'autorisation d'établissement d'une communication large bande c'est-à-dire d'une dite communication lourde qui doit être réalisée sur un canal de message.
- L'établissement d'une communication. S'il s'agit d'une communication lourde les fréquences des lasers doivent être diminuées à partir de la fréquence de signalisation jusqu'aux positions qu'elles occuperont en cours de communication, conformément au processus précédemment décrit.

Le réseau comporte un bloc de gestion BG qui comporte notamment le générateur de base, les générateurs de marquage et le générateur de référence de signalisation précédemment mentionnés. Conformément à la figure 3 ce bloc de gestion contient cinq lasers qui sont les suivants :
- Un générateur de base B1, stabilisé de façon absolue, émet une onde de base à une fréquence de base F0 pour constituer une référence au bas du domaine spectral du réseau.
- Deux émetteurs B2 et B3, stabilisés de façon relative, émettant les ondes de premier et de deuxième marquage pour constituer deux références de sommet de pile.
- Un émetteur de signalisation B4 et un oscillateur local B5 sont utilisés pour dialoguer avec les terminaux libres sur le canal partagé.

Un coupleur B50 permet d'injecter les ondes émises par les sources B1, B2, B3, B4 dans une fibre d'émission B51 reliée au coupleur en étoile CE.

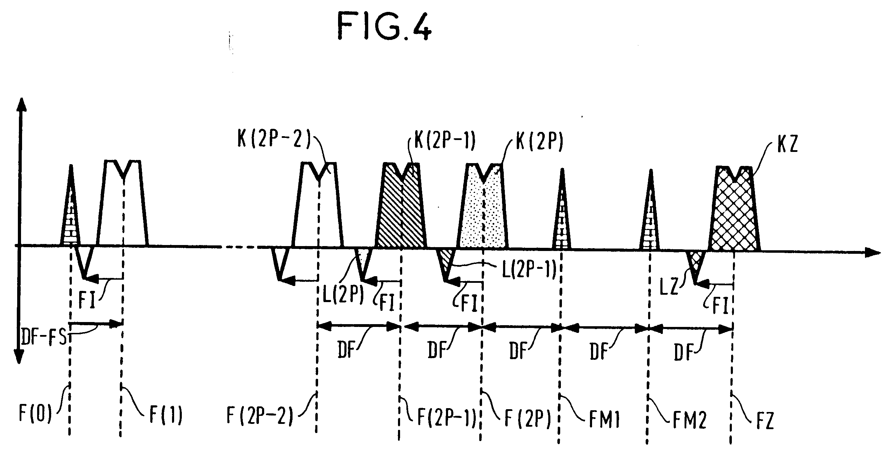

La fréquence FM1 de l'émetteur de premier marquage B2 est asservie (voir fig.4) une distance DF au dessus du dernier canal de message K(2P). La fréquence FM2 de l'émetteur de deuxième marquage B3 est asservie à une distance DF au-dessus de la fréquence de premier marquage. La fréquence de l'émetteur de signalisation B4 est asservie à une distance DF au-dessus de la fréquence de deuxième marquage. Les émetteurs B2, B3 et B4 subissent des modulations d'aide au positionnement à la fréquence FS afin de mettre en oeuvre des asservissements identiques à celui de l'émetteur du terminal considéré. Un signal sinusoïdal à la fréquence FS est issu pour cela d'un générateur d'aide au positionnement B60.

Des coupleurs optiques B12, B13, B14 sont utilisés pour prélever des fractions des ondes émises par les émetteurs B2, B3, B4 en vue de réaliser les battements nécessaires aux asservissements. Des coupleurs B22, B23, B24, B25, assurent respectivement les mélanges suivants :
- Le mélange de l'onde de premier marquage issu de l'émetteur B2 avec le signal issu d'une fibre de réception B52 pour l'asservissement de cet émetteur.
- Le mélange de l'onde de deuxième marquage issue de l'émetteur B3 avec l'onde de premier marquage pour l'asservissement de cet émetteur.
- Le mélange de l'onde de référence de signalisation issue de l'émetteur B4 avec l'onde de deuxième marquage pour l'asservissement de cet émetteur.
- Le mélange de l'onde fournie par l'oscillateur local B5 avec le signal issu du coupleur B22 pour permettre l'asservissement de l'oscillateur local .

Des récepteurs de positionnements B32, B33, B34, B35 fournissent des signaux d'erreurs de positions E2, E3, E4, E5 pour ces quatre asservissements. Les récepteurs B32, B33 et B34 sont constitués chacun d'un détecteur quadratique et d'un filtre centré sur la fréquence DF - 2FS. Le récepteur B35 et constitué par un discriminateur de fréquence centré sur la fréquence intermédiaire FI.

Un circuit de commande B70 a les fonctions suivantes :
- Il assure les asservissements. Il reçoit pour cela en entrée les signaux de positions E2, E3, E4 et E5 pour les lasers B2, B3, B4 et B5, respectivement.
- Il met en oeuvre le protocole d'accès aux communications larges bandes en dialoguant avec les terminaux libres sur le canal de signalisation. Il reçoit des messages D5 et ces terminaux à travers un démodulateur B61. Il transmet à ces terminaux des messages D4 qui modulent en fréquence l'onde de signalisation émise par l'émetteur B4. Il peut ainsi prendre en compte les différentes demandes d'accès large bande et transmettre les autorisations d'établissement de communication.

Il augmente de 2DF les fréquences des lasers B2, B3, B4 et B5 après l'établissement d'une communication large bande de façon à marquer le nouveau sommet de pile en s'appuyant sur la dernière fréquence d'émission.

On va maintenant décrire l'établissement puis la rupture d'une communication :

La mise en relation entre deux terminaux libres se fait sur le canal de signalisation KZ. Le bloc de gestion est également présent sur ce canal. Il connaît les demandes de communications en cours, les éventuelles priorités et l'occupation du domaine spectral du réseau. En fonction de ces informations il alloue les droits à communication sur les canaux de message marqués en sommet de pile, et sur le canal partagé.

Pendant la durée du positionnement des terminaux concernés sur ces canaux, les ondes émises par ces terminaux ne doivent pas être injectées dans leurs fibres d'émission pour ne pas perturber les autres communications qui transitent par le coupleur en étoile CE. Les émetteurs sont pour cela déconnectés provisionnement de ce coupleur par les interrupteurs tels que 34.

Le terminal appelant :
- diminue la fréquence de son émetteur de 2xDF et l'asservit à DF au-dessus de la plus haute fréquence d'émission F(2P).
- diminue la fréquence de son oscillateur local de DF et l'asservit à FI au dessous de la deuxième fréquence de marquage LM2.

Le terminal appelé :
- diminue la fréquence de son émetteur de DF et l'asservit à DF au dessus de la première fréquence de marquage LM1.
- diminue la fréquence de son oscillateur local de 2xDF et l'asservit à FI au dessous de la première fréquence de marquage.

Les émetteurs sont reconnectés au coupleur en étoile et le bloc de gestion augmente les fréquences de marquage de 2xDF pour les asservir sur le nouveau sommet de pile. Tous les terminaux libres sont asservis sur ces fréquences et suivent ce mouvement.

Au moment de la rupture de la communication, les deux terminaux qui y participaient déconnectent leurs émetteurs du coupleur en étoile. Dans chacun d'eux l'oscillateur local est alors provisoirement asservi en fréquence sur l'émetteur. La fréquence de ce dernier est augmentée jusqu'au sommet de pile qu'il reconnait en détectant les deux ondes de marquage. Emetteurs et oscillateurs locaux peuvent à nouveau s'asservir sur la fréquence de signalisation. Le terminal appelant de la communication adjacente supérieure détecte la disparition de l'émission du terminal qui le précédait et décale progressivement sa fréquence d'émission de 2xDF pour combler l'espace libéré par la communication disparue. Tous les canaux supérieurs de la pile, y compris le canal de signalisation suivent ce décalage.

Les figures 4 à 9 représentent le spectre des fréquences du réseau lorsque un nombre P de communications sont en cours, le nombre 2P étant inférieur au nombre N des terminaux. Elles représentent notamment une paire supérieure de canaux qui est constituée par les canaux de message K(2P-1) et K(2P) utilisés par la paire supérieure de terminaux, c'est-à-dire par la paire de terminaux dont les fréquences d'émission F(2P-1) et F(2P) sont les plus éloignées de la fréquence de base F(0).

Ces deux canaux sont représentés avec deux types de hachures différentes, chaque type de hachures étant utilisé pour toutes les ondes émises par un même terminal et pour les signaux électriques en résultant. La paire supérieure est celle qui réalise la communication qui a été établie en dernier sur le réseau. C'est pourquoi elle occupe le sommet de la pile. Plus précisément le canal appelant K(2P-1) c'est-à-dire celui qui est utilisé par le terminal appelant constitue le canal inférieur de cette paire supérieure, ce terminal étant de même le terminal inférieur de cette paire de terminaux. De manière analogue le canal appelé K(2P) constitue le canal supérieur de cette même paire.

Les fréquences d'émission de ces deux terminaux sont représentées en F(2P-1) et F(2P) respectivement. Elles constituent des fréquences médianes de ces canaux.

Les ondes locales de réception L(2P-1) et L(2P) qui sont respectivement engendrées dans ces deux terminaux sont représentées au dessous de la ligne des abscisses, pour faciliter la compréhension du dessin. Les canaux de message occupés par d'autres terminaux sont représentés sans hachures. Il s'agit notamment du canal supérieur K(2P-2) occupé par le terminal supérieur de la paire précédant la paire supérieure.

La fréquence d'émission F(2P-2) qui est située au milieu du canal K(2P-2) constitue la fréquence d'appui inférieur pour le terminal qui occupe le canal K(2P-1). La fréquence médiane F(2P-1) de ce canal constitue la fréquence d'appui inférieur pour le terminal qui occupe le canal K(2P).

De manière générale les écarts de fréquence réalisés par le réseau sont représentés par des flèches horizontales en trait fort, la ou les pointes de la flèche désignant la ou les fréquences qui sont commandées ou prédéterminées pour réaliser ces écarts.

Les asservissements des fréquences d'émission sont généralement des asservissements bilatéraux. C'est pourquoi les flèches d'asservissement ont généralement deux pointes telles que la flèche entre les fréquences F(2P) et F(2P-1).

La fréquence d'émission F(1) qui est située au bas de la pile est asservie unilatéralement par rapport à la fréquence de base F(0). Les distances entre terminaux ainsi asservies sont égales à l'incrément de fréquence DF, la distance entre les fréquences F(1) et F(0) étant la fréquence d'aide au positionnement.

Le canal de signalisation est représenté en KZ. Les fréquences de l'onde de référence de signalisation et de l'onde locale de réception du générateur de signalisation BG sont représentées en FZ et LZ et les fréquences de premier et de deuxième marquage en FM1 et FM2, respectivement.

Les asservissements des fréquences F(2P), FM1 et FM2 sont bilatéraux. Celui de la fréquence FZ est unilatéral.

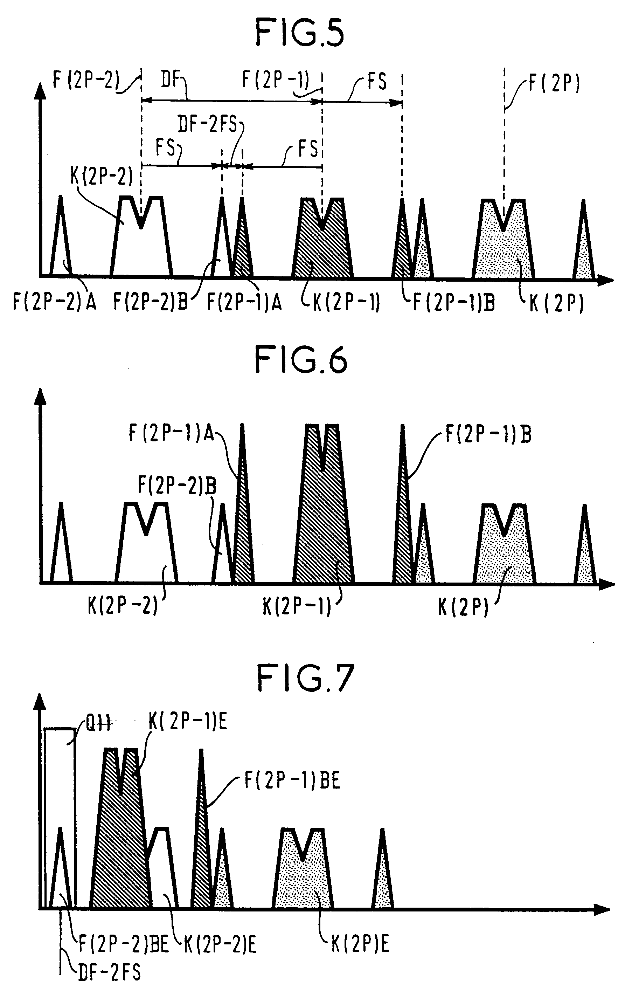

Sur la figure 5 apparaissent les canaux de message K(2P-2), K(2P-1) et K(2P) ainsi que leurs fréquences médianes F(2P-2), et F(2P-1) et F(2P). Cette figure montre de plus lesdites première et seconde fréquences latérales d'aide au positionnement F(2P-1)A et F(2P-1) B du terminal considéré qui occupe le canal K(2P-1). Ces fréquences sont respectivement égales à F(2P-1)-FS et F(2P-1)+FS.

En ce qui concerne le canal K(2P-2) les ondes homologues sont représentées en F(2P-2)A et F(2P-2)B, respectivement.

La distance d'appui inférieur F(2P-1)-F(2P-2) du terminal occupant le canal K(2P-1) est maintenue égale à l'incrément de fréquence DF grâce au fait que la différence entre les fréquences F(2P-1)A et F(2P-2)B est maintenue égale à ladite fréquence de consigne de positionnement d'émission qui vaut DF-2FS.

La figure 6 représente le spectre des mêmes ondes optiques à l'entrée du détecteur 10 du terminal considéré. Il différe de celui de la figure 5 par les intensités relatives accrues des ondes issues de l'émetteur 1, à savoir celles qui occupent le canal K(2P-1) et les fréquences latérales F(2P-1)A et F(2P-1)B.

La figure 7 représente schématiquement un spectre théorique des signaux électriques résultant de la détection de ces ondes dans le détecteur 10. La bande passante du discriminateur 11 est centrée sur la fréquence de consigne de positionnement DF-2FS et est représentée en Q11. Les signaux résultant de la détection de certaines ondes sont désignés par les références de ces ondes complétées par la lettre E. Leurs fréquences sont égales à la différence entre les fréquences de ces ondes et la première fréquence latérale d'aide au positionnement F(2P-1)A de ce terminal qui est l'une des fréquences prépondérantes par les puissances correspondantes. On comprendra que certains signaux sont omis, tels que ceux résultant de battements de diverses ondes avec le canal K(2P-1) ou avec la fréquence F(2P-1)B qui correspondent aussi à de fortes puissances. On comprendra aussi que certains signaux tels que K(2P)E sont représentés pour faciliter la compréhension mais qu'ils auraient des fréquences trop élevées pour apparaître réellement sous forme électrique en sortie du détecteur.

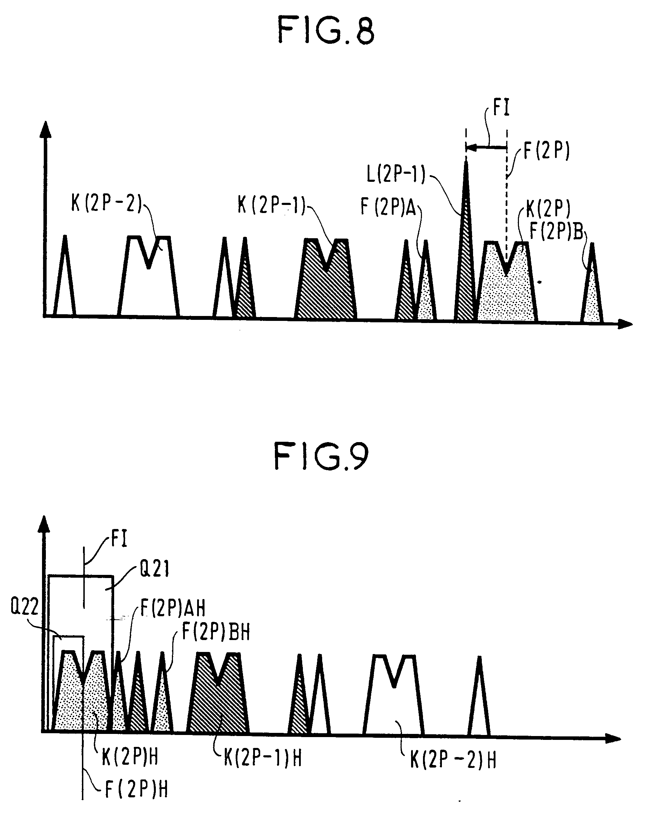

La figure 8 représente le spectre optique à l'entrée du détecteur 20 du terminal considéré. Dans ce spectre l'onde prépondérante par sa puissance est l'onde locale de réception qui provient de l'oscillateur local 2 et dont la fréquence est désignée par la référence L(2P-1) et vaut F(2P)-FI grâce à un asservissement réalisé avec l'aide du détecteur 20.

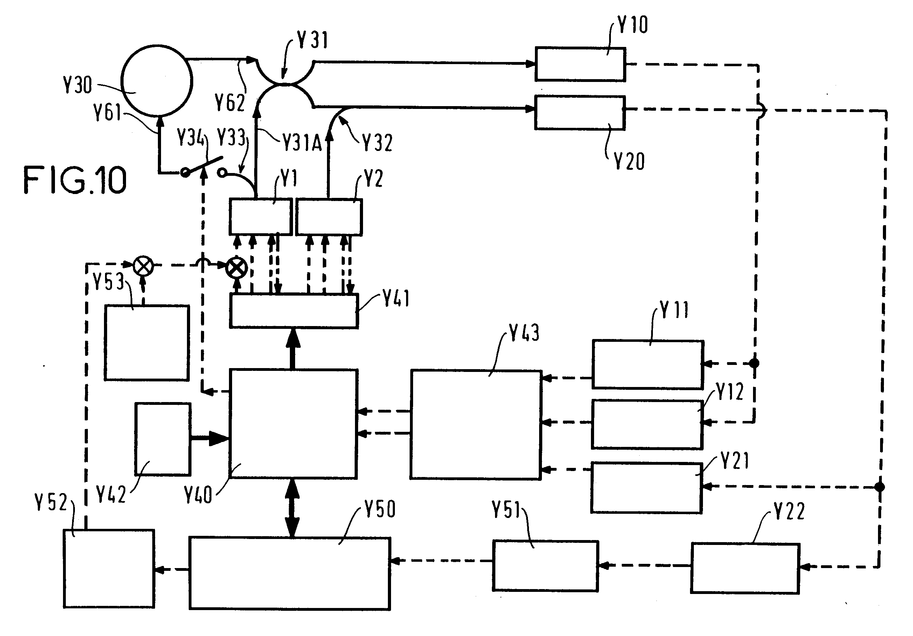

Sur la figure 9 les signaux électrique résultant de la détection de certaines de ces ondes par le détecteur 20 sont désignés par les références de ces ondes complétées par la lettre H. Leurs fréquences sont égales à la différence entre les fréquences de ces ondes et la fréquence prépondérante L(2P-1). Les mêmes remarques s'appliquent qu'à propos de la figure 7.

Les bandes passantes du discriminateur 21 et du circuit d'amplification et de filtrage 22 sont représentées en Q21 et Q22, respectivement.

On va maintenant décrire le deuxième réseau donné en exemple de mise en oeuvre de la présente invention. Ce réseau est représenté à la figure 10. Il est généralement analogue au premier précédemment décrit, sauf q'il fonctionne en mode alternat et présente, par rapport à ce premier réseau, des dispositions au moins partiellement différentes qui sont adaptées à ce mode de fonctionnement et dont certaines vont être indiquées maintenant.

De manière d'abord générale, selon une disposition avantageuse, lesdits moyens de discrimination d'appui du terminal considéré d'un réseau fonctionnant en mode alternat comportent des moyens de formation d'onde de discrimination d'appui qui sont mis en action par ledit signal de perte d'appui pour fournir à ladite entrée locale (Y31A) dudit mélangeur de positionnement d'émission (Y31) de ce terminal une onde de discrimination d'appui ayant une fréquence de discrimination d'appui qui présente, par rapport à une valeur de ladite fréquence locale de positionnement d'émission immédiatement antérieure à la formation de ce signal de perte d'appui, un écart spectral de discrimination d'appui propre à faire apparaître un écart de positionnement affectant la fréquence dudit signal de battement de positionnement d'émission, cet écart de positionnement pouvant avoir l'un ou l'autre des deux signes algébriques positif et négatif, - ledit signal de perte d'appui inférieur étant fourni lorsque ledit écart de positionnement présente un signe algébrique prédéterminé.

Selon une autre disposition avantageuse les moyens de formation d'onde de discrimination d'appui sont des moyens pour provoquer un écart d'émission affectant provisoirement la fréquence d'émission du terminal considéré. Cet écart d'émission est par exemple positif, c'est-à-dire que la fréquence d'émission s'éloigne provisoirement un peu plus de la fréquence de base. Dans le cas où la fréquence d'aide au positionnement FS est inférieure à la moitié de l'incrément de fréquence DF, le signal de perte d'appui inférieur sera alors fourni et le décalage progressif de la fréquence d'émission vers la fréquence de base aura alors lieu si le signal de battement de positionnement d'émission subit un écart de fréquence négatif. Ce dernier peut être par exemple détecté par un circuit de commande Y40 en sortie d'un discriminateur d'appui Y12 constitué par un discriminateur de fréquence prévu à cet effet et alimenté en sortie du détecteur de positionnement d'émission Y10.

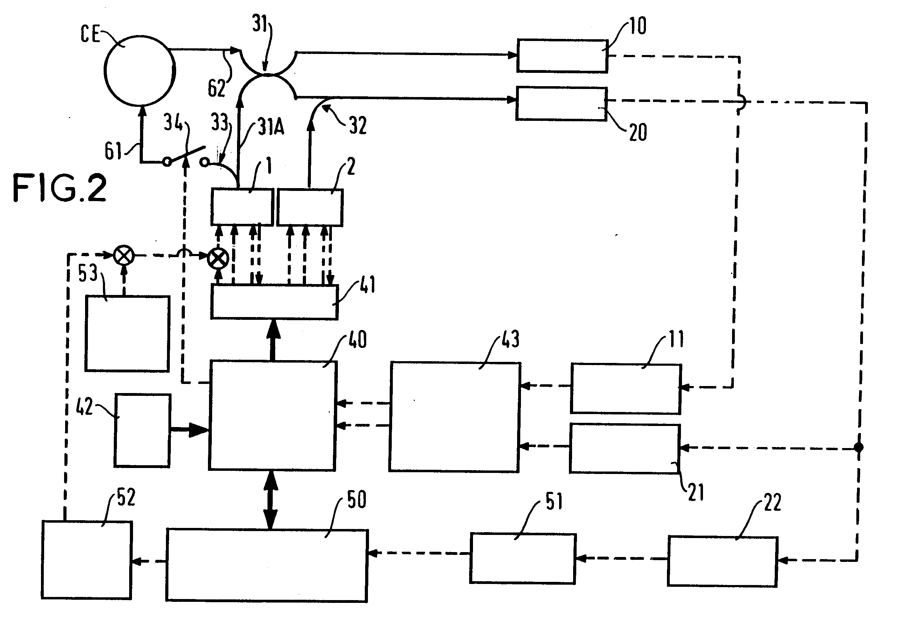

Conformément à la figure 10 le terminal considéré du réseau fonctionnant en mode alternat comporte des éléments analogues à ceux du terminal de la figure 2 sauf que le discriminateur d'appui Y12 est ajouté et que le circuit de commande Y40 est partiellement modifié. Quand deux éléments sont analogues dans ces deux terminaux, respectivement, les signes de référence qui désignent ces deux éléments sont les mêmes sauf que la lettre Y est ajoutée au début des signes de référence de l'élément du terminal de la figure 10.

## Revendications

1. Procédé de communication sur fibres optiques avec multiplexage en fréquences, procédé dans lequel des fréquences d'émission (F(1)...F(2P)) utilisées comme fréquences porteuses pour des communications simultanées forment une pile dans laquelle elles se succèdent à partir d'une fréquence de base (F(0)) jusqu'à un sommet de pile (F(2P-1),F(2P)) en étant séparées les unes des autres par des distances spectrales au moins égales à un incrément de fréquence prédéterminé (DF), ce procédé étant caractérisé par le fait que, préalablement à chaque communication, chaque fréquence d'émission devant être utilisée pour cette communication est amenée en sommet de pile (FM1) puis, pendant cette communication, cette fréquence d'émission (F(2P-1) est maintenue par asservissement à une distance spectrale égale audit incrément de fréquence (DF) au delà d'une fréquence d'appui inférieur (F(2P-2) propre à cette fréquence d'émission, ceci lorsque une telle fréquence d'appui inférieur peut être détectée pour réaliser cet asservissement, cette fréquence d'émission étant décalée progressivement vers ladite fréquence de base (F(0)) lorsqu'aucune dite fréquence d'appui inférieur ne peut être détectée.

2. Réseau de communication sur fibres optiques avec multiplexage en fréquences, ce réseau comportant :
- une pluralité de terminaux (T1, T2, T3...TN) associés respectivement à autant de périphériques entre lesquels des messages doivent être transmis,
- deux fibres optiques associées à chacun desdits terminaux (T1) pour guider des ondes optiques, ces fibres étant une fibre d'émission (61) pour guider des ondes d'émission à partir de ce terminal, et une fibre de réception (62) pour guider des ondes qui doivent être reçues par ce terminal,
- et un coupleur en étoile (CE) pour recevoir les ondes optiques lui parvenant par lesdites fibres d'émission, et pour transmettre chacune de ces ondes optiques vers tous ces terminaux par lesdites fibres de réception,
- chaque terminal de ce réseau pourvant constituer un terminal considéré (T1) qui comporte :
- un émetteur (1) pour émettre ladite onde d'émission à une fréquence d'émission commandée et pour appliquer une modulation informative à cette onde,
- des moyens de positionnement d'émission pour positionner cette fréquence d'émission dans un domaine spectral du réseau de manière que les diverses fréquences d'émission forment une pile dans laquelle elles se succèdent à partir d'une fréquence de base fixe (F(0) jusqu'à un sommet de pile (F(2P-1), F(2P)) en étant séparées les unes des autres par des distances spectrales au moins égales à un incrément de fréquence prédéterminé (DF),
- et des moyens de réception pour démoduler certaines des ondes reçues par le terminal considéré,
- lesdits moyens de positionnement d'émission comportant des moyens d'appui d'émission comportant eux mêmes :
- un mélangeur de positionnement d'émission (31) pour mélanger les ondes reçues par le terminal considéré avec une onde locale de positionnement d'émission qui a une fréquence locale de positionnement d'émission (F(2P-1)A) dans le domaine optique et qui est fournie sur une entrée locale (31A) de ce mélangeur à partir de l'émetteur (1) de ce terminal pour représenter sa fréquence d'émission (F(2P-1)),
- un détecteur de positionnement d'émission (10) alimenté par ledit mélangeur de positionnement d'émission pour former des signaux de battement de nature électrique résultant chacun du mélange de ladite onde locale de positionnement d'émission avec l'une desdites ondes reçues qui correspond à ce signal, l'un au moins de ces signaux constituant un signal de battement de positionnement d'émission (F(2P-2)BE) si celle desdites ondes reçues qui lui correspond constitue une onde externe de positionnement d'émission (F(EP-2)B) définissant une fréquence d'appui (F(2P-2) du terminal considéré, la fréquence de ce signal constituant une fréquence de battement de positionnement d'émission (F(2P-1)A-F(2P-2)B) qui définit une distance d'appui (F(2P-1)-F(2P-2)) entre ces fréquences d'émission (F(2P-1)) et d'appui (F(2P-2)), une dite onde reçue ne constituant cette onde externe de positionnement que si cette distance d'appui est située dans un intervalle d'appui prédéterminé comportant ledit incrément de fréquence (DF).
- et des moyens de commande de position d'émission (11, 40) sensibles à ladite fréquence de battement de positionnement d'émission (F(2p-1)A-F(2P-2)B) et commandant ladite fréquence d'émission de ce terminal pour rendre la différence entre lesdites fréquences d'émission (F(2P-1)) et d'appui (F(2P-2)) du terminal considéré égale au dit incrément de fréquence (DF),
- ce réseau étant caractérisé par le fait que lesdits moyens de positionnement d'émission comportent :
- des moyens de positionnement initial d'émission (40) qui sont mis en action lorsque le terminal considéré devient libre ou tout au moins avant le début d'une nouvelle communication et qui aménent la fréquence d'émission du terminal considéré audit sommet de pile,
- des moyens de détection d'appui inférieur (40) pour détecter la présence éventuelle, parmi les ondes reçues par le terminal considéré, d'une onde externe de positionnement inférieur d'émission constituée par une dite onde externe de positionnement d'émission définissant une fréquence d'appui inférieur de ce terminal, cette fréquence étant une dite fréquence d'appui de ce terminal plus proche de la fréquence de base que la fréquence d'émission de ce terminal, ces moyens fournissant un signal de perte d'appui inférieur lorsqu'une telle onde externe de positionnement inférieur d'émission n'existe plus,
- des moyens d'asservissement de position d'émission en cours de communication qui sont maintenus en action en cours de communication tant qu'existe une dite fréquence d'appui inférieur du terminal considéré et qui sont constitués par lesdits moyens d'appui d'émission (31, 10, 11, 40),
- et des moyens de décalque d'émission (40) qui sont mis en action en cours de communication lorsque un dit signal de perte d'appui inférieur du terminal considéré est fourni et qui rapprochent progressivement la fréquence d'émission de ce terminal de la fréquence de base jusqu'à ce que ce signal de perte d'appui inférieur ne soit plus fourni.

3. Réseau selon la revendication 2, caractérisé par le fait que lesdits moyens de détection d'appui inférieur du terminal considéré comportent :
- des moyens de détection non sélective d'appui pour fournir un signal de perte d'appui lorsque une dite onde externe de positionnement d'émission de ce terminal n'existe plus,
- et des moyens de discrimination d'appui qui sont mis en oeuvre au moins lorsque ledit signal de perte d'appui est fourni et qui fournissent alors ledit signal de perte d'appui inférieur ai l'onde externe de positionnement d'émission qui a disparu était une dite onde externe de positionnement inférieur d'émission.

4. Réseau selon la revendication 3, caractérisé par le fait que lesdits moyens de détection non sélective d'appui surveillent la puissance dudit signal de battement de positionnement d'émission et fournissent ledit signal de perte d'appui lorsque cette puissance décroît d'une manière prédéterminée.

5. Réseau selon la revendication 3, caractérisé par le fait que lesdits moyens de discrimination d'appui du terminal considéré d'un réseau fonctionnant en mode duplex enregistrent, en début de chaque communication et jusqu'à la fin de cette communication un bit de position relative représentatif du fait que le terminal considéré est appelant ou appelé et est par conséquent inférieur ou supérieur dans une paire de terminaux au cours de cette communication, la fréquence d'émission du terminal inférieur étant plus proche de la fréquence de base que celle du terminal supérieur, ces moyens fournissant une indication d'infériorité si ce terminal est inférieur dans cette paire,
- ledit signal de perte d'appui inférieur étant fourni lorsque ledit signal de perte d'appui et ladite indication d'infériorité sont simultanément fournis.

6. Réseau selon la revendication 3, caractérisé par le fait que lesdits moyens de discrimination d'appui du terminal considéré d'un réseau fonctionnant en mode alternat comportent des moyens de formation d'onde de discrimination d'appui qui sont mis en action par ledit signal de perte d'appui pour fournir à ladite entrée locale (Y31A) dudit mélangeur de positionnement d'émission (Y31) de ce terminal une onde de discrimination d'appui ayant une fréquence de discrimination d'appui qui présente, par rapport à une valeur de ladite fréquence locale de positionnement d'émission immédiatement antérieure à la formation de ce signal de perte d'appui, un écart spectral de discrimination d'appui propre à faire apparaître un écart de positionnement affectant la fréquence dudit signal de battement de positionnement d'émission, cet écart de positionnement pouvant avoir l'un ou l'autre des deux signes algébriques positif et négatif,
- ledit signal de perte d'appui inférieur étant fourni lorsque ledit écart de positionnement présente un signe algébrique prédéterminé.

7. Réseau selon la revendication 6, caractérisé par le fait que lesdits moyens de formation d'onde de discrimination d'appui sont des moyens pour provoquer un écart d'émission affectant provisoirement la fréquence d'émission du terminal considéré.

8. Réseau selon la revendication 7, caractérisé par le fait que lesdits moyens de discrimination d'appui comportent un discriminateur de fréquence alimenté en sortie dudit détecteur de positionnement d'émission (Y10) pour constituer un discriminateur d'appui (Y12).

9. Réseau selon la revendication 2, caractérisé par le fait qu'il comporte un générateur de référence de signalisation (BG) comportant lui-même :
- un émetteur de signalisation (B4) commandable en fréquence pour émettre une onde optique qui constitue une onde de référence de signalisation à une fréquence de signalisation (FZ),
- des moyens de positionnement de signalisation comportant des moyens d'asservissement de position de signalisation et des moyens de décalage de position de signalisation pour positionner ladite fréquence de signalisation dans le domaine spectral du réseau,
- une fibre d'émission (B51) pour guider ladite onde de référence de signalisation jusqu'au dit coupleur en étoile (CE),
- et une fibre de réception (B52) pour guider des ondes optiques qui ont été transmises à ce coupleur et qui sont reçues par ce générateur,
- lesdits moyens d'asservissement de position de signalisation étant analogues à ceux du terminal considéré et comportant :
- un mélangeur de positionnement de signalisation (B24) pour recevoir d'une part lesdites ondes reçues par le générateur de référence de signalisation et d'autre part une onde locale de positionnement de signalisation de nature optique définissant ladite fréquence de signalisation,
- un récepteur de positionnement de signalisation (B34) alimenté par ledit mélangeur de positionnement de signalisation pour former des signaux de battement de nature électrique dont l'un est un signal de battement de positionnement de signalisation résultant du mélange de ladite onde locale de positionnement de signalisation avec une onde externe de positionnement de signalisation constituée par une dite onde reçue définissant une fréquence d'appui de signalisation qui est la fréquence la plus éloignée dans la pile desdites fréquences d'émission, la fréquence de ce signal constituant une fréquence de battement de positionnement de signalisation comprise dans un intervalle prédéterminé et représentative d'une distance spectrale entre ces fréquences de signalisation et d'appui de signalisation,
- et des moyens de commande de fréquence de signalisation (B70) qui sont sensibles à ladite fréquence de battement de positionnement de signalisation et qui commandent ladite fréquence de signalisation pour asservir la distance spectrale entre cette fréquence de signalisation et ladite fréquence d'appui de signalisation à un supplément de distance spectrale prédéterminé qui constitue un supplément de signalisation,
- lesdits moyens de décalage de position de signalisation éloignant la fréquence de signalisation lorsqu'une nouvelle communication est établie, ceci sur une distance de décalage qui est égale à un nombre d'incréments de fréquence égal au nombre des fréquences d'émission qui sont utilisées pour cette nouvelle communication,
- lesdits moyens de positionnement d'émission du terminal considéré comportant :
- des moyens de recherche de signalisation pour éloigner progressivement sa fréquence d'émission de la fréquence de base lorsque ce terminal devient libre, et pour reconnaître la coïncidence de cette fréquence d'émission avec ladite fréquence de signalisation,
- et des moyens d'asservissement d'attente commandés par ces moyens de recherche de signalisation pour asservir cette fréquence d'émission à cette fréquence de signalisation à partir du moment où une coïncidence a été reconnue entre ces deux fréquences.

10. Réseau selon la revendication 9, caractérisé par le fait que le terminal considéré comporte en outre des moyens de positionnement initial de réception d'attente (B70) pour amener ladite fréquence locale de ce terminal à une position spectrale dont la distance par rapport à ladite fréquence de signalisation (FZ) est égale à ladite fréquence intermédiaire (FI) lorsque ce terminal est libre de manière que lesdits moyens de réception puisse ensuite recevoir des messages dans le canal de signalisation (KZ).

## Patentansprüche

1. Fernmeldeverfahren mit Lichtleitfasern und Frequenzmultiplexierung, bei dem als Trägerfrequenzen für gleichzeitige Informationsübertragungen verwendete Sendefrequenzen (F(1) ... F(2P)) eine Reihe bilden, in der sie ausgehend von einer Basisfrequenz (F(0)) bis zu einem Ende der Reihe (F(2P-1), F(2P)) aufeinanderfolgen und voneinander durch spektrale Abstände mindestens gleich einem vorgegebenen Frequenzinkrement (DF) getrennt sind, dadurch gekennzeichnet, daß vor jeder Informationsübertragung jede Sendefrequenz, die für diese Übertragung verwendet werden soll, an das Ende der Reihe (FM1) gebracht wird, daß während dieser Übertragung dieser Sendefrequenz (F(2P-1) durch eine Nachregelung in einem spektralen Abstand gleich dem Frequenzinkrement (DF) jenseits einer dieser Sendefrequenz eigenen unteren Stützfrequenz (F(2P-2) gehalten wird, wenn eine solche untere Stützfrequenz erfaßt werden kann, um diese Nachregelung durchzuführen, und daß diese Sendefrequenz progressiv in Richtung zur Basisfrequenz (F(0)) verschoben wird, falls keine untere Stützfrequenz erfaßt werden kann.

2. Fernmeldenetz mit Lichtleitfasern und Frequenzmultiplexierung, das enthält:
- eine Mehrzahl von Endgeräten (T1, T2, T3, ... TN), die je einem Peripheriegerät zugewiesen sind, zwischen denen Nachrichten ausgetauscht werden können,
- zwei Lichtleitfasern, die jedem der Endgeräte (T1) zugeordnet sind, um Lichtwellen zu übertragen, wobei diese Fasern von einer Sendefaser (61) zur Übertragung der mit einer Sendefrequenz von diesem Endgerät ausgesendeten Sendewelle und aus einer Empfangsfaser (62) zur Übertragung der für dieses Endgerät bestimmten Wellen gebildet werden,
- und einen Sternkoppler (CE), der die Lichtwellen von den Sendefasern empfängt und jede dieser Lichtwellen an alle Endgeräte über die Empfangsfasern weiterleitet,
- wobei jedes Endgerät dieses Netzes ein betrachtetes Endgerät (T1) bilden kann, das aufweist:
- einen zumindest frequenzmäßig steuerbaren Sender (1), um die Sendewelle auszusenden und um eine Informationsmodulation auf diese Welle aufzuprägen,
- Mittel zur Einstellung der Sendefrequenz, um die Sendefrequenz in einem Spektralbereich des Netzes einzustellen, indem eine Reihe von Sendefrequenzen gebildet wird, die aufeinander ausgehend von einer festen Basisfrequenz (F(0)) bis zum Ende der Reihe F(2P-1), F(2P)) in einem spektralen Abstand gleich zumindest einem vorbestimmten spektralen Inkrement (DF) aufeinanderfolgen,
- und Empfangsmittel, um bestimmte der von dem betrachteten Endgerät empfangenen Wellen zu demodulieren,
- wobei die Sendepositioniermittel Sendestützmittel enthalten, die ihrerseits aufweisen:
- eine Sende-Mischstufe (31), um die von dem betrachteten Endgerät empfangenen Wellen einer örtlichen Sendefrequenz-Einstellungswelle zu mischen, die eine örtliche Sendefrequenz (F(2P-1)A) im optischen Frequenzbereich bildet und auf einem lokalen Eingang (31A) dieser Mischstufe vom Sender (1) dieses Endgeräts geliefert wird, um dessen Sendefrequenz (F(2P-1)) zu bilden,
- einen Sendedetektor (10), der von der Sende-Mischstufe gespeist wird, um elektrische Überlagerungssignale aufgrund der Mischung der örtlichen Sendewelle mit einer der empfangenen Wellen resultiert, die diesem Signal entspricht, wobei mindestens eines dieser Signale ein Sende-Überlagerungssignal (F(2P-2)BE) bildet, wenn die entsprechende empfangene Welle eine äußere Sendewelle (F(2P-2)B) bildet, welche eine Stützfrequenz (F(2P-2)) des betrachteten Endgeräts definiert, während die Frequenz dieses Signals eine Sende-Überlagerungsfrequenz (F(2P-1)A-F(2P-2)B) bildet, die einen Stützabstand (F(2P-1)-F(2P-2)) zwischen diesen Sende- und Stützfrequenzen (F(2P-1)); (F(2P-2)) definiert, wobei eine empfangene Welle diese äußere Sendewelle nur bildet, wenn der Stützabstand in einem vorbestimmten Stützintervall liegt, das das Frequenzinkrement (DF) enthält,
- und Steuermittel für die Sendefrequenz (11, 40), die auf die Überlagerungsfrequenz der Sendepositionierung (F(2P-1)A-F(2P-2)B) ansprechen und die Sendefrequenz dieses Endgeräts so steuern, daß die Differenz zwischen der Sendefrequenz (F(2P-1)) und der Stützfrequenz (F(2P-2)) des betrachteten Endgeräts dem Frequenzinkrement (DF) gleicht, dadurch gekennzeichnet, daß die Sendepositioniermittel aufweisen:
- ursprüngliche Sendepositioniermittel (40), die aktiviert werden, wenn das betrachtete Endgerät frei wird oder zumindest bei Beginn einer neuen Informationsübertragung, und die die Sendefrequenz des betrachteten Endgeräts an das Ende der Reihe bringen,
- untere Stütz-Erfassungsmittel (40), um das eventuelle Vorliegen einer niedrigeren äußeren Sendefrequenz in den von dem betrachteten Endgerät empfangenen Wellen zu erfassen, die von einer eine untere Stützfrequenz dieses Endgeräts definierenden äußeren Sendefrequenz gebildet wird, wobei eine solche Frequenz eine Stützfrequenz dieses Endgeräts wird, wenn diese Stützfrequenz näher bei der Basisfrequenz liegt als die Sendefrequenz dieses Endgeräts, wobei diese Mittel ein Signal liefern, das den Verlust der niedrigeren Stützfrequenz anzeigt, wenn eine solche äußere niedrigere Sendefrequenz nicht mehr existiert;
- Mittel zur Nachregelung der Sendeposition während der aktiven Verbindung, die während der Verbindung in Aktion gehalten werden, solange eine niedrigere Stützfrequenz des betrachteten Endgeräts existiert, wobei diese Mittel von den Sendestützmitteln (31, 10, 11, 40) gebildet werden,
- und Sendefrequenz-Verschiebungsmittel (40), die während der Verbindung wirksam werden, wenn ein Verlust der unteren Stützfrequenz des betrachteten Endgeräts signalisiert wird, wobei diese Mittel die Sendefrequenz dieses Endgeräts progressiv an die Basisfrequenz annähern, bis dieses Signal betreffend den Verlust der unteren Stützfrequenz nicht mehr geliefert wird.

3. Netz nach Anspruch 2, dadurch gekennzeichnet, daß die Mittel zur Erfassung der unteren Stützfrequenz des betrachteten Endgeräts aufweisen:
- Mittel zur nicht-selektiven Erfassung der Stützfrequenz, um ein Signal betreffend den Verlust der Stützfrequenz zu liefern, wenn eine äußere Sendewelle dieses Endgeräts nicht mehr existiert,
- und Stützfrequenz-Diskriminationsmittel, die mindestens dann werden, wenn das den Verlust der Stützfrequenzen anzeigende Signal geliefert wird, und die dann das Signal betreffend den Verlust der unteren Stützfrequenz liefern, wenn die äußere Sendefrequenzwelle, die verschwunden ist, eine untere äußere Sendefrequenz war.

4. Netz nach Anspruch 3, dadurch gekennzeichnet, daß die nicht-selektiven Mittel zur Erfassung der Stützfrequenz die Leistung des Sendepositionier-Überlagerungssignals überwachen und das Signal betreffend den Verlust der Stützfrequenz liefern, wenn diese Leistung auf vorbestimmte Weise absinkt.

5. Netz nach Anspruch 3, dadurch gekennzeichnet, daß die Mittel zur Diskriminierung der Stützfrequenz des betrachteten Endgeräts eines im Duplexmodus arbeitenden Netzes zu Beginn jeder Informationsübertragung und bis zum Ende dieser Übertragung ein Positionsbit registrieren, das angibt, ob das betrachtete Endgerät das rufende oder gerufene Endgerät ist und somit das untere oder obere Endgerät in dieser Verbindung ist, wobei die Sendefrequenz des unteren Endgeräts näher bei der Basisfrequenz als die des oberen Endgeräts liegt und die Mittel eine Angabe "unten" liefern, wenn dieses Endgerät das untere Endgerät dieses Paars ist, wobei das Signal des Verlusts der unteren Stütze geliefert wird, wenn das Signal betreffend den Verlust der Stütze zugleich mit der Angabe, daß es sich um das untere Endgerät handelt, geliefert wird.

6. Netz nach Anspruch 3, dadurch gekennzeichnet, daß die Stützfrequenz-Diskriminationsmittel des betrachteten Endgeräts eines im Wechselmodus betriebenen Netzes Mittel zur Bildung der Stützdiskriminationswelle aufweisen, die durch das Signal betreffend den Verlust der Stützfrequenz aktiviert werden, um an den örtlichen Eingang (Y31A) der Sendepositionier-Mischstufe (Y31) dieses Endgeräts eine Stützdiskriminationswelle mit einer Stützdiskriminationsfrequenz zu liefern, die bezüglich eines Werts der lokalen Sendepositionierfrequenz unmittelbar vor der Bildung dieses Stützfrequenzverlustsignals einen solchen Stützfrequenzdiskriminationsabstand aufweist, daß ein Positionierabstand auftritt, der die Frequenz des Sendepositionier-Überlagerungssignals beeinflußt, wobei dieser Positionierabstand ein positives oder negatives Vorzeichen besitzen kann, und wobei das Signal betreffend den Verlust der unteren Stützfrequenz geliefert wird, wenn der Positionierabstand ein bestimmtes Vorzeichen besitzt.

7. Netz nach Anspruch 6, dadurch gekennzeichnet, daß die Mittel zur Bildung der Stützdiskriminationswelle Mittel sind, die einen Frequenzabstand hervorrufen, der vorübergehend die Sendefrequenz des betrachteten Endgeräts verändert.

8. Netz nach Anspruch 7, dadurch gekennzeichnet, daß die Stützdiskriminationsmittel einen Frequenzdiskriminator aufweisen, der vom Ausgang des Sendepositionierdetektors (Y10) gespeist wird, um einen Stützdiskriminator (Y12) zu bilden.

9. Netz nach Anspruch 2, dadurch gekennzeichnet, daß es einen Signalisationsbezugsgenerator (BG) aufweist, der seinerseits enthält:
- einen in seiner Frequenz steuerbaren Signalisationssender (B4), um eine optische Welle auszusenden, die eine Signalisations-Bezugswelle mit einer Signalisationsfrequenz (FZ) bildet,
- Signalisations-Positioniermittel mit Mitteln zur Nachregelung der Signalisationsposition und Mitteln zur Verschiebung der Signalisationsposition, um die Signalisationsfrequenz im Spektralbereich des Netzes zu positionieren,
- eine Sendefaser (B51), um die Signalisations-Bezugsfaser bis zum Sternkoppler (CE) zu führen,
- eine Empfangsfaser (B52), um an diesen Koppler übertragene Lichtwellen zu führen, die von diesem Generator empfangen wurden, wobei die Mittel zur Nachregelung der Signalisationsposition denen des betrachteten Endgeräts entsprechen und die folgenden Elemente enthalten:
- eine Mischstufe für die Signalisationspositionierung (B24), die einerseits die von dem Signalisations-Bezugsgenerator empfangenen Wellen und andererseits eine örtliche Signalisations-Positionierwelle optischer Natur empfängt, die die Signalisationsfrequenz definiert,
- einen Signalisations-Positionsempfänger (B34), der von der Signalisations-Positionier-Mischstufe gespeist wird und elektrische Überlagerungssignale bildet, von denen eines ein Überlagerungssignal der Signalisationspositionierung aufgrund der Mischung der örtlichen Signalisations-Positionierwelle mit einer äußeren Signalisations-Positionierwelle ist, die von einer eine Signalisations-Stützfrequenz definierenden Empfangswelle gebildet wird und die am weitesten von der Reihe der Sendefrequenzen entfernte Frequenz ist, wobei die Frequenz dieses Signals eine Überlagerungsfrequenz der Signalisationspositionierung bildet, die sich in einem vorbestimmten Frequenzintervall befindet, das für einen spektralen Abstand zwischen der Signalisationsfrequenz und der Signalisations-Stützfrequenz repräsentativ ist,
- und Signalisationsfrequenz-Steuermittel (B70), die auf die Positionier-Überlagerungsfrequenz der Signalisation ansprechen und die Signalisationsfrequenz so steuern, daß der spektrale Abstand zwischen dieser Signalisationsfrequenz und der Signalisations-Stützfrequenz auf einen vorbestimmten Zuschlag des vorbestimmten spektralen Abstands eingeregelt wird, der einen Signalisationszuschlag bildet,
- wobei die Mittel zur Verschiebung der Signalisationsposition die Signalisationsfrequenz entfernen, wenn eine neue Verbindung aufgebaut wird, und zwar um einen Frequenzabstand, der gleich der Anzahl von Frequenzinkrementen gleich der Anzahl von Sendefrequenzen ist, die für diese neue Verbindung verwendet werden,
- wobei die Sendepositioniermittel des betrachteten Endgeräts enthalten:
- Mittel zur Suche der Signalisierung, um progressiv die Sendefrequenz von der Basisfrequenz zu entfernen, wenn dieses Endgerät frei wird, und um die Koinzidenz dieser Sendefrequenz mit der Signalisationsfrequenz zu erkennen,
- und Mittel zur Warteregelung, die von den Mitteln zur Signalisationssuche gesteuert werden, um die Sendefrequenz der Signalisationsfrequenz nachzuregeln, sobald eine Koinzidenz zwischen diesen beiden Frequenzen erkannt worden ist.

10. Netz nach Anspruch 9, dadurch gekennzeichnet, daß das betrachtete Endgerät außerdem Wartemittel zur ursprünglichen Empfangspositionierung (B70) enthält, um die örtliche Frequenz dieses Endgeräts auf einen Frequenzplatz zu bringen, dessen Abstand zur Signalisationsfrequenz gleich der Zwischenfrequenz (FZ) ist, wenn dieses Endgerät frei ist, so daß die Empfangsmittel dann die Nachrichten im Signalisationskanal (KZ) empfangen können.

## Claims

1. A communications method over optical fibers with frequency multiplexing, in which method emission frequencies (F(1)...F(2P)) used as carrier frequencies for simultaneous calls form a stack in which they follow one another from a base frequency (F(0)) up to a top of the stack (F(2P-1), F(2P)) being distant from one another by spectrum distances that are not less than a predetermined frequency increment (DF), the method being characterized by the fact that prior to each call, each emission frequency that is to be used for the call is brought to the top of the stack (FM1) and then, during the call, each emission frequency (F(2P-1)) is servo-controlled to a spectrum distance equal to said frequency increment (DF) beyond a lower support frequency (F(2P-2)) specific to said emission frequency, with this taking place so long as such a lower support frequency can be detected on which to perform said servo-control, said emission frequency being shifted progressively towards said base frequency (F(0)) whenever no such lower support frequency can be detected.

2. A communications network over optical fibers with frequency multiplexing, the network comprising:
a plurality of terminals (T1, T2, T3, ..., TN) associated with as many respective user peripherals between which messages are to be transmitted;
two optical fibers associated with each of said terminals (T1) to guide optical waves, said fibers comprising an emission fiber (61) for guiding emission waves from the terminal and a reception fiber (62) for guiding waves that are to be received by the terminal; and
a star coupler (CE) for receiving the optical waves that reach it via said emission fibers and for transmitting each of said optical waves to all of the terminals via said reception fibers;
each terminal in the network being capable of constituting a terminal under consideration (T1) and comprising:
an emitter (1) for emitting said emission wave at a controlled emission frequency and for applying information-carrying modulation to said wave;
emission positioning means for positioning said emission frequency in a spectrum range of the network in such a manner that the various emission frequencies constitute a stack in which they follow one another from a fixed base frequency (F(0)) up to a stack top (F(2P-1), F(2P)) being distant from one another by spectrum distances that are not less than a predetermined frequency increment (DF); and
reception means for demodulating some of the waves received by the terminal under consideration;
said emission positioning means including emission support means comprising:
an emission positioning mixer (31) for mixing the waves received by the terminal under consideration with a local emission positioning wave which has a local emission positioning frequency (F(2P-1)A) in the optical range and which is applied to a local input (31A) of said mixer from the emitter (1) of the terminal to represent its emission frequency (F(2P-1));
an emission positioning detector (10) receiving signals from said emission positioning mixer and forming beat signals that are electrical, each beat signal being the result of mixing said local emission positioning wave with one of said received waves which corresponds thereto, at least one of said beat signals constituting an emission positioning beat signal (F(2P-2)BE) if the corresponding one of said received waves constitutes an external emission positioning wave (F(2P-2)B) defining a support frequency (F(2P-2)) for the terminal under consideration, the frequency of said signals constituting an emission positioning beat frequency (F(2P-1)A-F(2P-2)B) which defines a support distance (F(2P-1)-F(2P-2)) between said emission frequency (F(2P-1)) and said support frequency (F(2P-2)), one of said received waves constituting said external positioning wave only if said support distance lies in a predetermined support range including said frequency increment (DF); and
emission position control means (11, 40) responsive to said emission positioning beat frequency (F(2P-1)A-F(2P-2)B) and controlling said emission frequency of said terminal to make the difference between said emission frequency (F(2P-1)) and said support frequency (F(2P-2)) of the terminal under consideration equal to said frequency increment (DF);
said network being characterized by the fact that said emission positioning means comprise:
means (40) for initial emission positioning which are put into action when the terminal under consideration becomes free or at least before the beginning of a new call, and which bring the emission frequency of the terminal under consideration to the top of the stack;
lower support detection means (40) for detecting the presence, if any, of an external lower emission positioning wave from amongst the waves received by the terminal under consideration, said wave being constituted by one of said external emission positioning waves defining a support frequency below the terminal, said frequency being one of said support frequencies of said terminal closer to the base frequency than the emission frequency of the terminal, said means providing a loss-of-lower-support signal when such an external lower emission positioning wave no longer exists;
means for servo-controlling the emission position during a call, which means are kept in action throughout a call so long as one such support frequency exists below the terminal under consideration, said means being constituted by said emission support means (31, 10, 11, 40); and
emission shift means (40) which are put into action during a call whenever one of said loss-of-lower-support signals is provided for the terminal under consideration, said means progressively moving the emission frequency of the terminal towards the base frequency until said loss-of-lower-support signal is no longer provided.

3. A network according to claim 2, characterized by the fact that said lower support detection means of the terminal under consideration comprise:
non-selective support detection means for providing a loss-of-support signal when one of said external emission positioning waves for the terminal no longer exist; and
support discrimination means which are put into operation at least when said loss-of-support signal is provided and which then provide said loss-of-lower-support signal if the external emission positioning wave that has disappeared was one of said lower external emission positioning waves.

4. A network according to claim 3, characterized by the fact that said non-selective support detection means monitor the power of said emission positioning beat signal and provide said loss-of-support signal when said power decreases in a predetermined manner.

5. A network according to claim 3, characterized by the fact that said support discrimination means of the terminal under consideration in a network operating in duplex mode stores, at the beginning of each call and until the end of said call, a relative position bit representative of the fact that the terminal under consideration is calling or is called and is consequently the lower or the upper terminal in a pair of terminals engaged on said call, the emission frequency of the lower terminal being closer to the base frequency than the emission frequency of the upper terminal, said means providing a low indication if said terminal is the lower terminal in the pair; and
said loss-of-lower-support signal is provided when said loss-of-support signal and said low indication are provided simultaneously.

6. A network according to claim 3, characterized by the fact that said support discrimination means of the terminal under consideration in a network operating in alternating mode include support discrimination wave forming means which are put into action by said loss-of-support signal to provide said local input (Y31A) of said emission positioning mixer (Y31) of said terminal with a support discrimination wave having a support discrimination frequency which, relative to a value of said local emission positioning frequency that existed immediately prior to said loss-of-support signal being formed, presents a support discrimination spectrum difference suitable for causing a positioning difference to appear affecting the frequency of said emission positioning beat signal, said positioning difference being capable of having one or other of the positive and negative algebraic signs;
said loss-of-lower-support signal being provided when said positioning difference has a predetermined algebraic sign.

7. A network according to claim 6, characterized by the fact that said support discrimination forming means are means for causing an emission difference that temporarily affects the emission frequency of the terminal under consideration.

8. A network according to claim 7, characterized by the fact that said support discrimination means include a frequency discriminator connected to the output of said emission positioning detector (Y10) to constitute a support discriminator (Y12).

9. A network according to claim 2, characterized by the fact that it includes a signalling reference generator (BG) itself including:
a signalling emitter (B4) controllable in frequency to emit an optical wave which constitutes a signalling reference wave at a signalling frequency (FZ);
signalling positioning means including signalling position servo-control means and signalling position shift means for positioning said signalling frequency in the spectrum range of the network;
an emission fiber (B51) for guiding said signalling reference wave to said star coupler (CE); and
a reception fiber (B52) for guiding optical waves that have been transmitted via the coupler and which are received by said generator;
said signalling position servo-control means being analogous to the position servo-control means of the terminal under consideration, and comprising:
a signalling positioning mixer (B24) for receiving firstly said waves received by the signalling reference generator and secondly a local signalling positioning wave that is optical and that defines said signalling frequency;
a signalling positioning receiver (B34) receiving signals from said signalling positioning mixer to form beat signals that are electrical, one of which is a signalling positioning beat signal resulting from mixing said local positioning wave with an external signalling positioning wave constituted by one of said received waves defining a signalling support frequency which is the most distant frequency in the stack of said emission frequencies, the frequency of said signal constituting a signalling positioning beat frequency lying in a predetermined range and representative of a spectrum distance between said signalling frequency and said signalling support frequency; and
signalling frequency control means (B70) which are responsive to said signalling positioning beat frequency and which control said signalling frequency to servo-control the spectrum distance between said signalling frequency and said signalling support frequency to be equal to a predetermined spectrum distance supplement which constitutes a signalling supplement;
said signalling position shift means operating whenever a new call is set up to move the signalling frequency away through a shift distance which is equal to the same number of frequency increments as the number of emission frequencies used by the new call;
said emission positioning means of the terminal under consideration including:
signalling search means for progressively moving its emission frequency away from the base frequency when the terminal becomes free, and for recognizing coincidence between said emission frequency and said signalling frequency; and
standby servo-control means controlled by said signalling search means for servo-controlling said emission frequency to said signalling frequency from the moment when coincidence has been recognized between said two frequencies.

10. A network according to claim 9, characterized by the fact that the terminal under consideration further includes initial positioning means for reception standby (B70) to bring said local frequency of said terminal to a spectrum position whose distance from said signalling frequency (FZ) is equal to said intermediate frequency (FI) whenever said terminal is free so that said reception means can subsequently receive messages in the signalling channel (KZ).
